(19) Europäisches Patentamt
European Patent Office
Office européen des brevets

(11) Veröffentlichungsnummer: **0 015 233**
**B1**

(12) # EUROPÄISCHE PATENTSCHRIFT

(45) Veröffentlichungstag der Patentschrift: **07.03.84**

(51) Int. Cl.³: **C 09 B 69/00**, C 09 B 44/02, C 09 B 19/02, D 06 P 1/66, D 06 P 3/60

(21) Anmeldenummer: **80810026.7**

(22) Anmeldetag: **28.01.80**

(54) **Verfahren zum Färben von cellulosehaltigen Fasermaterialien.**

(30) Priorität: **02.02.79 CH 1043/79**
**06.06.79 CH 5268/79**

(43) Veröffentlichungstag der Anmeldung: **03.09.80 Patentblatt 80/18**

(45) Bekanntmachung des Hinweises auf die Patenterteilung: **07.03.84 Patentblatt 84/10**

(84) Benannte Vertragsstaaten: **CH DE FR GB**

(56) Entgegenhaltungen:
**CH - A - 528 577**
**FR - A - 1 495 232**
**FR - A - 2 311 888**
**GB - A - 1 006 892**
**GB - A - 1 338 250**

(73) Patentinhaber: **CIBA-GEIGY AG, Postfach, CH-4002 Basel (CH)**

(72) Erfinder: **Galafassi, Pierre, Dr., 12 Rue des Sapins, F-68170 Rixheim (FR)**
Erfinder: **Adam, Jean-Marie, Dr., 3, Rue de Montreux, F-68300 Saint-Louis (FR)**
Erfinder: **Loew, Peter, Dr., Concordiastrasse 23, CH-4142 Münchenstein (CH)**
Erfinder: **Scheidegger, Hans, Dr., Bollwerkstrasse 78, CH-4102 Binningen (CH)**

**EP 0 015 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Verfahren zum Färben von cellulosehaltigen Fasermaterialien

Die Erfindung betrifft ein Verfahren zum Färben von cellulosehaltigen Fasermaterialien mit spezifischen kationischen Farbstoffen ohne separate Salzzugabe, bzw. ohne Vor- oder Nachbehandlung der Faser mit Tannin, Brechweinstein oder ähnlichen Produkten, eine zur Durchführung des Verfahrens geeignete Färbe- bzw. Vorbehandlungsflotte sowie das gemäss dem Verfahren gefärbte cellulosehaltige Fasermaterial.

Es ist bekannt, cellulosehaltige Fasermaterialien mit kationischen Farbstoffen im Ausziehverfahren zu färben, entweder derart, dass man diese Materialien mit z. B. Tannin, zum Erreichen eines genügenden Aufbaus des Farbstoffes vorbehandelt und gegebenenfalls noch mit z. B. Brechweinstein, zum Erreichen einer brauchbaren Nassechtheit nachbehandelt.

Weitere kationische Farbstoffe, deren etwas höhere Standard-Affinität für Cellulosematerialien eine Anwendung ohne Tannin/Brechweinstein erlauben würde, fanden infolge mangelnder Egalität, besonders bei hellen und mittleren Tönen, keine praktische Anwendung. Dazu ist die Standard-Affinität dieser bekannten Farbstoffe in der Regel zu knapp, so dass tiefe Nuancen nicht erreichbar sind.

In der französischen Patentschrift 1495232 und in der englischen Patentschrift 1338250 sind kationische Farbstoffe beschrieben, die in ihrem Aufbau ausgedehnte planare aromatische Bereiche aufweisen. Dabei handelt es sich in der französischen Patentschrift um 4,4-Bis-(2-benzthiazolyl)-azobenzol-Derivate, die 1 bis 5 quaternäre Hydrazingruppen enthalten, während sich die Farbstoffe der englischen Patentschrift von einem Bisazofarbstoff als Grundkörper ableiten, der durch eine oder mehrere Amino- oder Ammoniumgruppen substituiert ist. In beiden Patentschriften ist erwähnt, dass derartige Farbstoffe zum Färben von Papier geeignet sind.

Ferner werden in der englischen Patentschrift 1006892 und in der französischen Patentanmeldung 2311888 Färbeverfahren für cellulosische Materialien angegeben, wobei kationische Farbstoffe zur Anwendung gelangen. Betreffen die Ausführungsbeispiele der englischen Patentschrift das Färben von Baumwollstoffen, so lässt sich nach dem Verfahren der französischen Anmeldung, die aus Jute bestehende Rückseite von Nylonteppichen anfärben. Damit es dabei nicht zu einer Anschmutzung des Polyamid-Faseranteils kommt, wird der Teppich, vorzugsweise vor dem Färben, mit einem Reservierungsmittel imprägniert. Bei den Reservierungsmitteln handelt es sich um quaternäre Imidazolin-Derivate.

Es ist auch bekannt, cellulosehaltige Fasermaterialien mit temporär- oder permanent anionischen Farbstoffen, wie z. B. herkömmlichen, gegebenenfalls nachkupferbaren Direktfarbstoffen, Schwefel- und Reaktivfarbstoffen im Ausziehverfahren zu färben. Diese Farbstoffe erfordern jedoch die Zugabe grosser Mengen an Elektrolyten wie Natriumsulfat ins Färbebad, um einen genügenden Aufbau der Farbstoffe zu gewährleisten.

Die Ausfärbungen mit den anionischen Farbstoffen besitzen nur eine sehr beschränkte Waschechtheit auf cellulosischen Textilmaterialien, es sei denn, sie wurden durch nachträgliche Insolubilisierung, Vergrösserung des adsorbierten Farbstoffmoleküls oder kovalente Bindung fixiert.

Diese bekannten Verfahren haben u. a. zum Nachteil, dass einerseits – bei kationischen Farbstoffen – eine ökologisch bedenkliche und zeitraubende sowie energetisch kostbare Vor- und Nachbehandlung erforderlich ist und die Ausfärbungen zudem nur eine sehr geringe Lichtechtheit und Nassechtheit aufweisen, oder sehr unegal und von der Nuance- bzw. Farbtiefe her, sehr beschränkte Färbungen liefern und dass andererseits bei anionischen Farbstoffen die Zugabe von grossen Salzmengen das Abwasser stark belastet. Es werden auch je nach Farbstofftyp ökologisch/toxikologisch bedenkliche Substanzen wie Kupferlonen, Natriumsulfide, chromhaltige Reduziermittel usw. zur Insolubilisierung bzw. Bindung des Farbstoffes auf der Faser benützt.

Der vorliegenden Erfindung lag daher die Aufgabe zugrunde, ein Färbeverfahren, vor allem für cellulosehaltige Fasermaterialien und auch für Papier zu entwickeln, das diese Nachteile ausschaltet.

Es wurde dabei gefunden, dass überraschenderweise durch Anwendung eines neuen Verfahrens mit kationischen bzw. basischen, d. h. unter Einsatzbedingungen protonierbaren Farbstoffen mit Egalisiermitteln der nachstehend angegebenen Art ohne Vor- und/oder Nachbehandlung der Faser mit Tannin/Brechweinstein, und ohne separate Salzzugabe zum Färbebad, Ausfärbungen auf diesen Materialien erhalten werden, die gekennzeichnet sind durch eine überraschend gute Egalität von hellen bis dunklen Tönen, durch einen sehr guten Farbstoffaufbau, durch einen hohen Ausziehgrad der Farbstoffe, durch eine sehr gute Reproduzierbarkeit der Färbung, wobei die Ausfärbungen eine überraschend hohe Nassechtheit besitzen, die z. T. derjenigen einer Färbung mit Küpen- bzw. Reaktivfarbstoffen gleichkommt, ohne dass dabei eine Insolubilisierung bzw. kovalente Bindung des Farbstoffes mit dem Substrat erforderlich ist.

Das erfindungsgemässe Verfahren zum Färben von cellulosehaltigen Fasermaterialien mit einer wässrigen Färbeflotte, die mindestens einen kationischen oder basischen Farbstoff enthält ist dadurch gekennzeichnet, dass Farbstoffe verwendet werden, die

a) über mindestens ein System an delokalisierten $\pi$-Elektronen verfügen, das aus mindestens 9 konjugierten, in einer Ebene liegenden Doppelbindungen besteht, und

b) eine planare Molekülstruktur (im Sinne einer Direktfarbstoffstruktur) besitzen, siehe z. B. folgende Literaturstellen: Th. Vickerstaff, «The Physical Chemistry of Dyeing», 2e Ed. 1954, Oliver/Boyd, Seiten 172–190; oder E. H. Daruwalla, S. S. Rao, B. D. Tilak, «Relation between Coplanarity and Substantivity of Quinoid Dyes applied to Cellulose Acetate and Cellulosic Fibres», JSDC 76, 1960, 418–424; oder A. Schaeffer, «Warum sind substantive Farbstoffe substantiv?», Melliand Textilberichte 39 (1958), 1, 68–74; 2, 182–186; 3, 289–292; oder J. Boulton, «The Dyeing of Cellulose: Theory and the Dyer», Textile Research Journal, 12, 1958, 1022–1030; oder W. L. Lead, «Cellulose Substantivity», JSDC 75, 1959, April, 195–196; wobei vor oder während der Färbung, dieses Material mit mindestens einem an sich bekannten kationischen oder basischen polymeren Egalisiermittel behandelt wird, welches mindestens eine Amino-, Ammonium-, Sulfonium- oder Phosphoniumgruppe enthält, wobei die Aminogruppe unter Anwendungsbedingungen in protonierter Form vorliegt.

Die erfindungsgemäss verwendbaren kationischen oder basischen Farbstoffe können auch anionische Gruppen, z. B. Sulfonsäure-, Phosphorsäure- oder Carbonsäuregruppen enthalten, mit der Bedingung, dass die Anzahl der kationischen bzw. basischen Gruppen im Farbstoffmolekül nicht kleiner ist als die Anzahl der anionischen Gruppen.

Vorteilhaft werden erfindungsgemäss solche Farbstoffe verwendet, die mindestens 12 ununterbrochen konjugierte, in einer Ebene liegende Doppelbindungen enthalten und welche vorteilhaft 1 bis 8, insbesondere 1 bis 3 kationische bzw. basische Gruppen enthalten.

Als kationische Gruppen kommen z. B. Gruppen der folgenden Formeln (Ia) bis (Ij) in Betracht:

(1a) 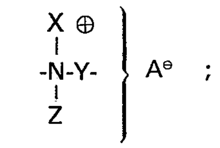 ;

(1b) 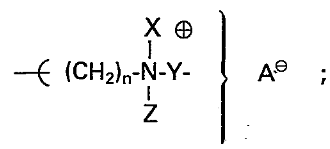 ;

(1c) 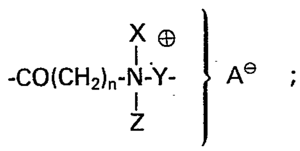 ;

(1d) 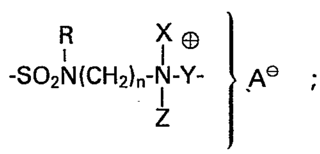 ;

(1e) 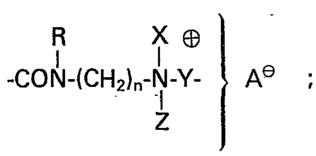 ;

(1f) 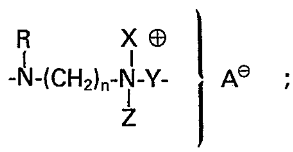 ;

(1g) 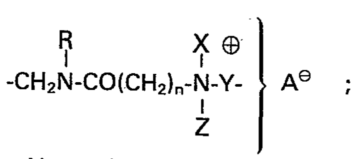 ;

(1h) 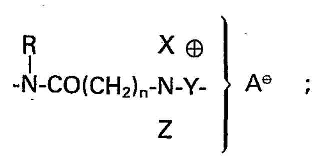 ;

(1i) 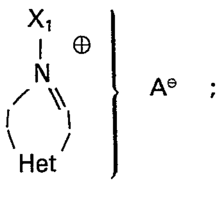 ;

(1j) 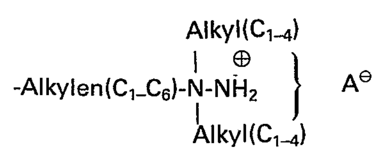

worin die Symbole $X_1$ eine Alkylenbrücke ($C_1$–$C_6$) oder eine Arylenbrücke (z. B. p-Phenylen), X, Y, R und Z eine unsubstituierte oder z. B. durch Hydroxyl oder Amino substituierte Alkylgruppe, wie die Methyl-, Äthyl-, Propyl-, Butylgruppe oder eine Arylgruppe, wie die Phenylgruppe oder eine Alkylarylgruppe oder ein Wasserstoffatom bedeuten, ferner X und Y und/oder Z zusammen mit dem N-Atom einen Heterocyclus wie den Pyridiniumring bilden können, und worin n die Zahlen 1 bis 6 und $A^{\ominus}$ ein Anion bedeutet.

Die basischen bzw. kationischen Gruppen können vom π-Elektronen-System des Chromophors isoliert oder im System des Chromophors enthalten sein.

Die basischen bzw. kationischen Gruppen können permanent oder temporär sein. Die Abspaltung der kationischen Gruppe im Fall einer temporären Gruppe kann gegebenenfalls zu einer kovalenten Bindung zwischen dem Farbstoffmolekül und dem Substrat z. B. den OH-Gruppen der Cellulose führen. Die Farbstoffe können auch ausserdem nichtionische oder temporär anionische faserreaktive Gruppen enthalten.

Bedingung ist, dass die erfindungsgemäss verwendbaren kationischen bzw. basischen Farbstoffe eine Direktfarbstoffstruktur aufweisen; sie müssen über ein möglichst langgestrecktes System an delokalisierten π-Elektronen verfügen, das aus über mindestens 9, vorteilhaft 12 ununterbrochen konjugierten und in einer Ebene liegenden Doppelbindungen besteht. In bevorzugten Konfigurationen, erstreckt sich das π-Elektronensystem über das ganze Chromophor; es ist aber auch möglich, dass das Chromophor mehrere derartige π-Elektronensysteme enthält, die über Brücken, wie z. B. über eine -NHCONH-, -NHCO-, $-SO_2-$ oder Triazinylbrücke, miteinander verbunden sind. Bevorzugte Stellen dieser Brücken sind diejenigen, die die Linearität und Planarität der Farbstoffmoleküle günstig beeinflussen. Die Chromophore können den verschiedensten chemischen Klassen angehören; es handelt sich z. B. um Azo-, Azostilben-, Stilben-, Azamethin-, Styryl-, Xanthen-, Azin-, Oxazin-, Thiazin-, Dioxazin-, Benzanthron-, Anthrachinon- und Perinonfarbstoffe. Die chromophoren Systeme können auch in komplexierter Form Metallatome, wie z. B. Cu, Ni, Co oder Cr enthalten, z. B. im Falle von Phthalocyanin- und Formazanfarbstoffen.

Es ist auch möglich, 2 oder 3 oder mehrere der definitionsgemässen Farbstoffe zusammen zu verwenden, wobei diese gleiche oder voneinander verschiedene Nuancen aufweisen können.

Vorteilhaft ist es ferner, wenn das Molekulargewicht der erfindungsgemäss verwendbaren Farbstoffe grösser als 600, insbesondere grösser als 800 ist.

Bei den erfindungsgemäss verwendbaren kationischen bzw. basischen Farbstoffen handelt es sich z. B. um Farbstoffe der folgenden Konstitutionen:

A) Azoverbindungen der Formel

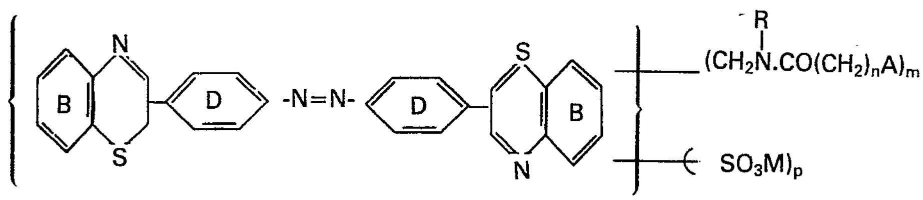

worin bedeuten:

R Wasserstoff oder eine Alkylgruppe mit 1 bis 4 C-Atomen,

A einen gegebenenfalls quaternisierten basischen Rest,

n die Zahlen 1 bis 4,

m die Zahlen von 1 bis 4,

M Wasserstoff oder ein Kation,

p die Zahlen 0 bis 2, mit der Bedingung, dass m gleich gross oder grösser ist als p, und worin die Benzolreste B und D ein- oder mehrmals, gleich oder verschieden weitersubstituiert sein können.

Diese Farbstoffe können z. B. hergestellt werden, indem man

a1) in eine Azoverbindung der Formel

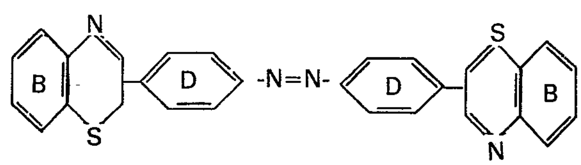

worin die Symbole B und D die angegebene Bedeutung haben, die Gruppe

$$-CH_2-\underset{R}{\underset{|}{N}}-CO-(CH_2)_n-\text{Halogen}$$

worin R und n die angegebene Bedeutung haben, ein- bis viermal einführt, anschliessend das Halogenatom durch eine basische oder quaternisierte basische Gruppe A bzw. $A^{\oplus}$ ] $X^{\ominus}$, worin $X^{\ominus}$ ein beliebiges Anion darstellt, ersetzt und gegebenenfalls die basische Gruppe durch Quaternisierung in eine quaternisierte basische Gruppe überführt, und anschliessend gegebenenfalls eine $SO_3M$-Gruppe einführt, oder

a2) dass man in eine Azoverbindung der Formel

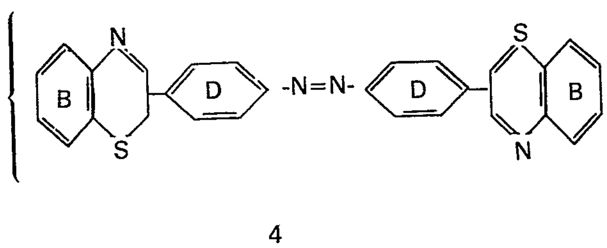

die Gruppe

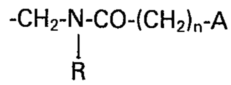

worin A eine basische Gruppe darstellt, und R und n die angegebene Bedeutung haben, ein- bis viermal einführt und anschliessend gegebenenfalls die basische Gruppe A quaternisiert und sodann gegebenenfalls eine $SO_3M$-Gruppe einführt.

B) Dioxazinverbindungen der Formel

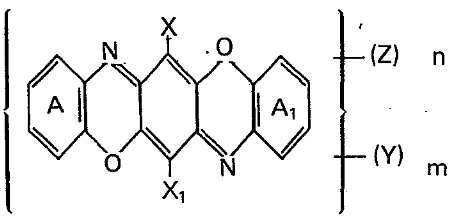

worin bedeuten:

Z eine gegebenenfalls quaternisierte basische Gruppe;

Y eine anionische Gruppe;

X und $X_1$ unabhängig voneinander gleiche oder verschiedene Substituenten aus der Klasse:

Wasserstoff, Halogen, CN, gegebenenfalls substituiertes Alkyl ($C_1$–$C_4$); gegebenenfalls substituiertes Phenyl; $NHCOR_1$, worin $R_1$ Alkyl ($C_1$–$C_4$), Cycloalkyl, gegebenenfalls substituiertes Aryl oder einen heterocyclischen Rest darstellt; $OCOR_2$, worin $R_2$ gegebenenfalls substituiertes Alkyl ($C_1$–$C_4$) oder Cycloalkyl bedeutet; oder

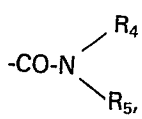

worin $R_4$ und $R_5$ unabhängig voneinander bedeuten:

Wasserstoff, gegebenenfalls substituiertes Alkyl ($C_1$–$C_4$), Cycloalkyl oder Aryl oder $R_4$ bildet zusammen mit $R_5$ unter Einschluss des N-Atoms einen heterocyclischen Ring oder X und $X_1$ bedeuten die Gruppe $COOR_6$, worin $R_6$ Wasserstoff, gegebenenfalls substituiertes Alkyl oder Cycloalkyl darstellt:

n die Zahlen von 1 bis 4;

m die Zahlen 0 bis 2 mit der Bedingung, dass die Zahl m kleiner ist als n, und worin die Benzoreste A und $A_1$ gleich oder verschieden, ein- oder mehrmals weitersubstituiert sein können. Diese Farbstoffe können hergestellt werden, indem man

b1) in eine Verbindung der Formel

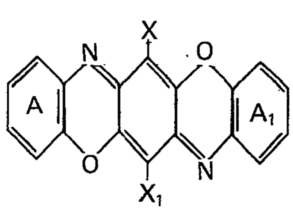

worin die Symbole A, $A_1$, X und $X_1$ die angegebene Bedeutung haben, eine gegebenenfalls quaternisierbare basische Gruppe Z einführt, anschliessend, sofern Y noch nicht vorhanden ist, gegebenenfalls eine anionische Gruppe Y einführt und die quaternisierbare basische Gruppe Z gegebenenfalls mit einem Quaternisierungsmittel quaternisiert, oder

b2) eine Verbindung der Formel

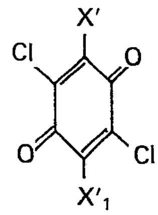

worin X′ und $X'_1$ dasselbe wie X und $X_1$, jedoch nicht CN bedeuten, mit mindestens a-Mol einer Verbindung $A\text{-}NH_2$ und b-Mol einer Verbindung $A_1\text{-}NH_2$, wobei die Summe von a und b mindestens 2 ist, welche Verbindungen $A\text{-}NH_2$ bzw. $A_1\text{-}NH_2$ eine gegebenenfalls quaternisierbare basische oder eine bereits quaternisierte basische Gruppe Z n-mal enthalten, unter Ringschluss zu einer Dioxazinverbindung kondensiert, eine gegebenenfalls vorhandene quaternisierbare basische Gruppe Z mit einem Quaternisierungsmittel quaternisiert und gegebenenfalls eine anionische Gruppe Y einführt oder dass man die Verbindung der Formel

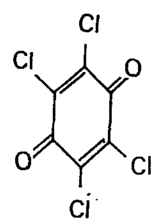

mit a-Mol $A\text{-}NH_2$ bzw. b-Mol $A_1\text{-}NH_2$ unter Ringschluss gemäss den obigen Angaben kondensiert und anschliessend die beiden Cl-Atome durch CN-Atome ersetzt.

C) Dioxazinverbindungen der Formel

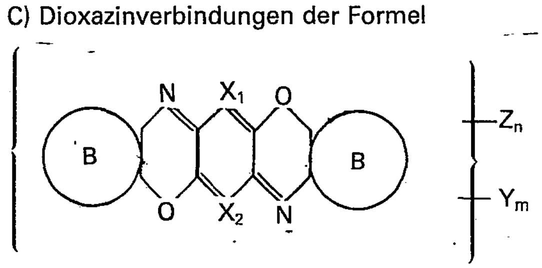

worin bedeutet:

$X_1$ und $X_2$ unabhängig voneinander eine unverzweigte oder verzweigte Alkylgruppe mit 1 bis 4 Kohlenstoffatomen, eine gegebenenfalls substituierte Phenylgruppe, Halogen, Wasserstoff, Cyan, eine gegebenenfalls im Phenylrest substituierte Phenylaminogruppe, die $CONH_2$-Gruppe, die CONH-phenyl-gruppe, welche im Phenylrest substituiert sein kann oder eine COO-Alkyl($C_1$–$C_4$)-gruppe;

Z eine gegebenenfalls quaternisierte basische Gruppe;

Y eine anionische Gruppe;

B unabhängig voneinander ein ankondensiertes Ringsystem mit 2 bis 4 carbocyclischen und/oder heterocyclischen Ringen, welches ausser den Substituenten Z und Y gegebenenfalls noch weitersubstituiert sein kann;

n die Zahlen von 1 bis 4 und

m die Zahlen von 0 bis 2 mit der Bedingung, dass m nicht grösser als n ist.

Diese Farbstoffe können hergestellt werden, indem man

c1) in eine Verbindung der Formel

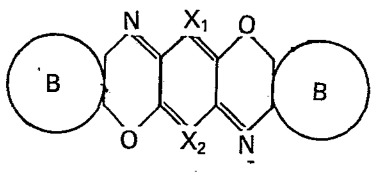

worin B gleich oder verschieden sein kann und $X_1$ und $X_2$ das oben Angegebene bedeutet, und welche den Rest Y gegebenenfalls enthalten kann, eine gegebenenfalls quaternisierbare basische Gruppe Z oder einen, eine solche Gruppe Z enthaltenden Rest einführt, anschliessend, sofern Y noch nicht vorhanden ist, gegebenenfalls eine wasserlöslich machende Gruppe Y einführt und die quaternisierbare basische Gruppe Z gegebenenfalls mit einem Quaternisierungsmittel quaternisiert; oder indem man

c2) eine Verbindung der Formel

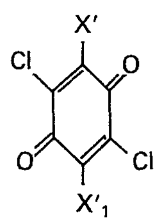

worin $X'_1$ und $X'_2$ dasselbe wie $X_1$ und $X_2$, jedoch kein CN bedeuten mit mindestens a-Mol einer Verbindung B-$NH_2$, und b-Mol einer Verbindung B'-$NH_2$, wobei die Summe a und b mindestens 2 ist, und wobei B und B' gleich oder verschieden sind, welche Verbindung eine gegebenenfalls quaternisierbare basische oder eine bereits quaternisierte basische Gruppe Z enthält, unter Ringschluss zu einer Dioxazinverbindung kondensiert, eine gegebenenfalls vorhandene quaternisierbare basische Gruppe Z mit einem Quaternisierungsmittel quaternisiert und gegebenenfalls die wasserlöslich machende Gruppe Y einführt, oder, sofern $X_1$ und $X_2$ im Endprodukt der Formel I CN bedeuten, dass man eine Verbindung der Formel

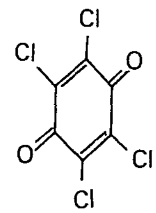

mit a- bzw. b-Mol B-$NH_2$ bzw. B'-$NH_2$ unter Ringschluss kondensiert und anschliessend die beiden Cl-Atome an der Stelle von $X_1$ und $X_2$ gegen CN austauscht.

Die im erfindungsgemässen Verfahren zur Anwendung gelangenden kationischen oder basischen polymeren Egalisiermittel, mit denen das zu färbende Cellulosematerial vor oder während der Färbung behandelt wird, enthalten als Ammoniumgruppe eine solche der nachfolgenden Formeln (2a) bis (2d):

(2a) 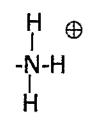 ; (2b) 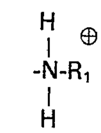 ;

(2c) 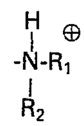 oder (2d) 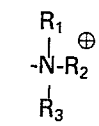

oder als Sulfoniumgruppe eine solche der Formel

(2e) 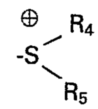

oder als Phosphoniumgruppe eine solche der Formel

(2f) 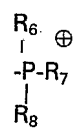

Die ammoniumgruppenhaltigen Egalisiermittel sind gegenüber den sulfonium- oder phosphoniumgruppenhaltigen Egalisiermitteln bevorzugt. $R_1$, $R_2$ und $R_3$ in den Formeln (2a) bis (2d) bedeuten jeweils gegebenenfalls substituiertes Alkyl, Cycloalkyl oder Alkenyl mit höchstens 20 Kohlenstoffatomen, Aryl, Aralkyl. In einer weniger bevorzugten Ausführungsform bedeuten $R_1$, $R_2$ und $R_3$ gegebenenfalls durch Phenyl substituiertes Alkyl mit 1 bis 8 Kohlenstoffatomen oder $R_1$ und $R_2$ zusammen können ferner mit dem Stickstoffatom, an das sie gebunden sind, einen gegebenenfalls substituierten heterocyclischen Ring mit 5 oder 6 Ringgliedern, z. B. einen Morpholinring bilden, $R_4$ bis $R_8$ in den Formeln (2e) und (2f) bedeuten gegebenenfalls durch Phenyl substituiertes Alkyl mit 1 bis 8 Kohlenstoffatomen.

Ammoniumgruppenhaltige Polymere, in welchen $R_1$ bis $R_3$ in den Ammoniumgruppen der

Formeln (2a) bis (2d) gegebenenfalls durch Phenyl substituiertes Alkyl mit 1 bis 8 Kohlenstoffatomen bedeuten, oder $R_1$ und $R_2$ oder $R_2$ und $R_3$ zusammen mit dem Stickstoffatom, an das sie gebunden sind, einen Morpholinrest bilden, leiten sich z. B. ab von Polyacryloxyalkyl-, Polymethacryloxyalkyl-, Polyacrylamidoalkyl-, Polymethacrylamidoalkyl-, Polyalkenyl-, Polyvinyloxy-, Polyvinylbenzyl-, Polydiallyl-, Polyvinylpyridinium- und Polyvinylimidazoliniumverbindungen, während sich sulfoniumgruppenhaltige Polymere z. B. von Polyacryl-, Polyvinylbenzyl- und Polydiallylverbindungen, und phosphoniumgruppenhaltige Polymere von Polyvinyl-, Polyacryl- und Polyvinylbenzylverbindungen ableiten.

Die Polymerisate, die sich von den vorstehend erwähnten Verbindungen ableiten, sind z. B. aus J. Macromol. Sci. Chem. A 4 (6) 10, 1970, S. 1327–1417, M. F. Hoover bekannt und können nach bekannten Methoden hergestellt werden.

Ausser diesen bekannten Polymerisaten kommen in einer bevorzugten Ausführungsart des erfindungsgemässen Verfahrens Egalisiermittel in Betracht, die ein Copolymerisat aus Maleinsäureanhydrid und Äthylen oder Styrol, welches mit einem n-Alkylamin mit 2 oder 3 Kohlenstoffatomen umgesetzt ist, das endständig am Alkylrest durch Alkylamino mit 1 bis 4 Kohlenstoffatomen oder durch ein cyclisches, 4 oder 5 Ringkohlenstoffatome und gegebenenfalls 1 Sauerstoffatom aufweisendes cyclisches Amin substituiert ist, oder ein Homopolymerisat eines gegebenenfalls durch Methyl oder Äthyl substituierten Vinylpyridins enthält, wobei das Homo- oder Copolymerisat mit einem Halogenmethylnaphthalin oder -diphenyl, mit Chloracetamid oder Chloracetonitril, oder mit einem gegebenenfalls durch Halogen, Methyl oder Äthyl substituierten Benzylhalogenid oder mit einem Alkyl- oder Alkenylhalogenid mit höchstens 4 Kohlenstoffatomen quaterniert ist.

Diese Homo- oder Copolymerisate weisen kationisch wiederkehrende Einheiten auf, die vorzugsweise einer der Formeln

(3a) 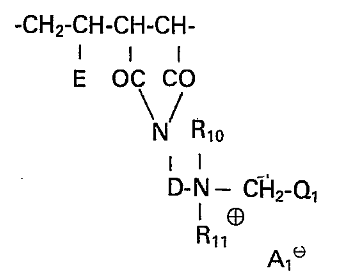

oder (3b) 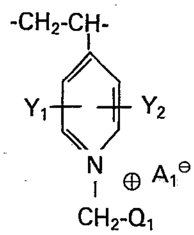

entsprechen, worin $Q_1$ einen Substituenten der Formeln

(4a) 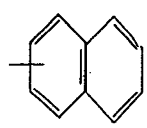 , (4b) 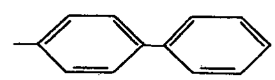

(4c) $-CO-NH_2$, (4d) $-C \equiv N$ , (4e) 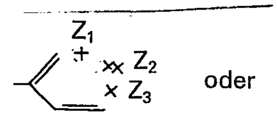 oder

(4f) $-(CH_2)_nH$, worin n = 5–19 bedeutet,

oder ein Gemisch mindestens eines Substituenten einer der Formeln (4a) bis (4e) mit Alkyl oder Alkenyl mit höchstens 4 Kohlenstoffatomen darstellt, und

D Äthylen oder n-Propylen,

E Wasserstoff oder Phenyl,

$R_{10}$ und $R_{11}$ je Methyl, Äthyl, n-Propyl oder n-Butyl oder zusammen mit dem Stickstoffatom, an welches sie gebunden sind, einen Pyrrolidin-, Piperidin- oder Morpholinrest bilden,

$A_1$ Halogen, $Y_1$ und $Y_2$ je Wasserstoff, Methyl oder Äthyl, und $Z_1$, $Z_2$ und $Z_3$ je Wasserstoff, Halogen, Methyl oder Äthyl bedeuten.

Weiter bevorzugte Egalisiermittel weisen kationisch wiederkehrende Einheiten einer der Formeln

(5a) 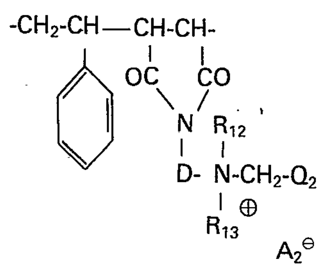

oder (5b) 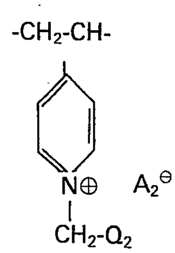

auf, worin $Q_2$ -CN, -CO-$NH_2$ oder Phenyl, D Äthylen oder n-Propylen, $A_2$ Chlor oder Brom, $R_{12}$ und $R_{13}$ je Methyl, Äthyl oder n-Propyl oder zusammen mit dem Stickstoffatom, an welches sie gebunden sind, einen Morpholinrest bilden, bedeuten, und insbesondere kationische wiederkehrende Einheiten einer der Formeln

(6a) 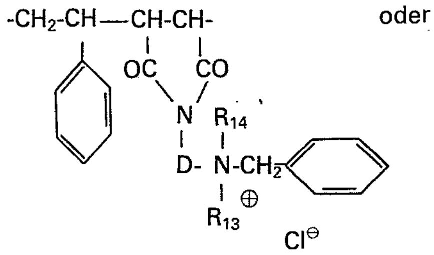

oder (6b) 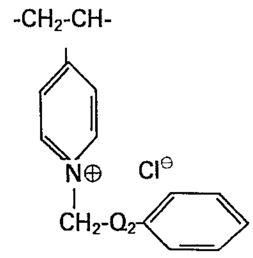

auf, worin D Äthylen oder n-Propylen, $R_{14}$ und $R_{15}$ je Methyl oder Äthyl bedeuten.

(7) 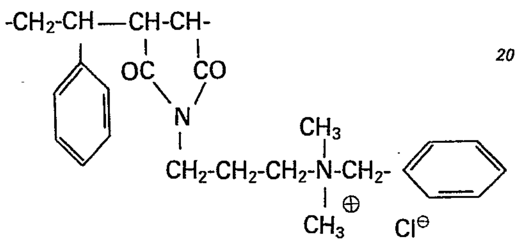

aufweisen, sind besonders bevorzugt.

Weitere Egalisiermittel, welche auch bevorzugt sind, weisen spezifische kationische, wiederkehrende Einheiten einer der Formeln

(8) 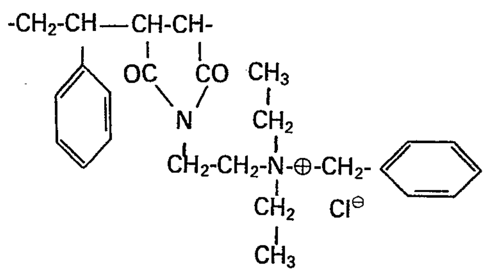

(9) 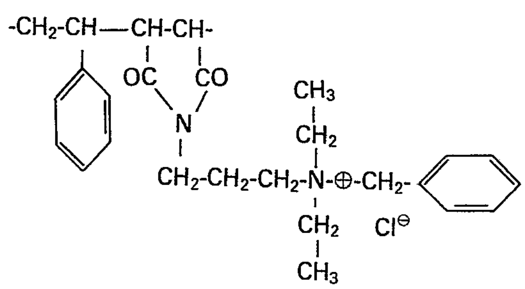

(10) 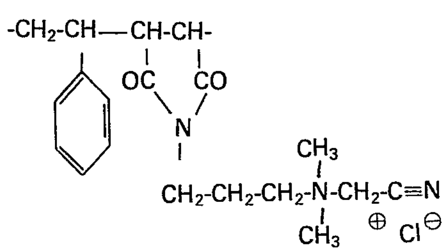

Egalisiermittel, welche spezifische kationische wiederkehrende Einheiten der Formel

(7a) 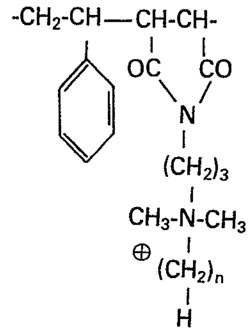

n = 6–20, bevorzugt 12

(11) 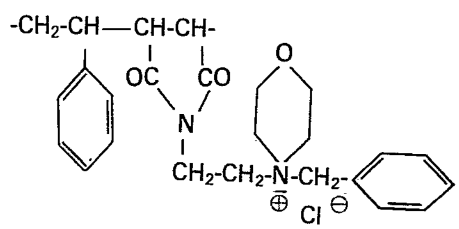

(12) 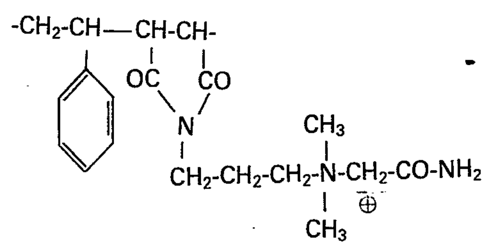

(13) 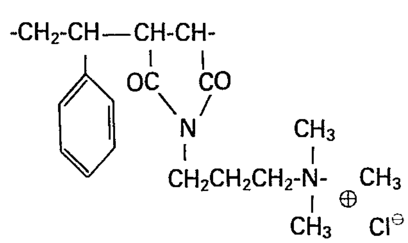

(14) 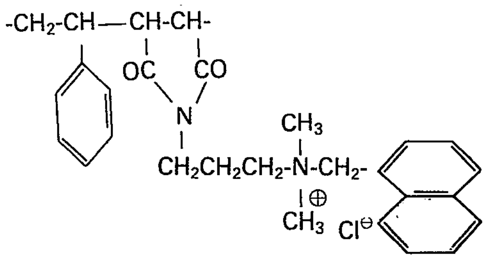

auf.

Das durchschnittliche Molekulargewicht der erfindungsgemäss verwendeten Egalisiermittel, die wiederkehrende Einheiten der Formeln (3a) oder (3b) aufweisen, beträgt in der Regel 1500 bis 1000000. Demgemäss weisen die Egalisiermittel im allgemeinen 4 bis 2200 wiederkehrende Einheiten der Formeln (3a) oder (3b), und insbesondere 1800 bis 2200 wiederkehrende Einheiten der Formel (3b) oder 7 bis 36 wiederkehrende Einheiten einer der Formeln (7) bis (14) auf.

Derartige polymere Verbindungen sind an sich bekannt und werden nach bekannten Methoden hergestellt. Sie sind z. B. in der deutschen Offenlegungsschrift 2604910 und der britischen Patentschrift 855028 beschrieben.

Als besonders bevorzugte, erfindungsgemäss verwendbare Egalisiermittel kommen auch polymere quaternäre Ammoniumsalze in Betracht, deren kationische wiederkehrende Einheiten der Formel

(15) 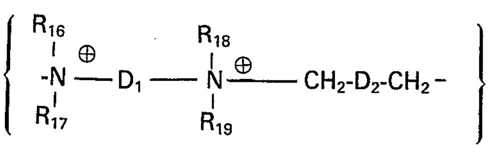

entsprechen, worin $R_{16}$, $R_{17}$, $R_{18}$ und $R_{19}$ gleich oder voneinander verschieden sind und gegebenenfalls substituiertes Alkyl, Cycloalkyl oder Alkenyl mit höchstens 20 Kohlenstoffatomen, Aryl oder Aralkyl bedeuten, oder ($R_{16}$ und $R_{17}$) und/oder ($R_{18}$ und $R_{19}$) zusammen mit dem Stickstoffatom, an dem sie gebunden sind, einen gegebenenfalls substituierten heterocyclischen Ring mit 5 oder 6 Ringgliedern bilden, bedeutet $D_1$ $-(CH_2)_m-$, worin m eine Zahl von 1 b bis 20 ist, gegebenenfalls unterbrochen durch mindestens eine -S-, -O- oder -CH=CH-Gruppierung oder substituiert mit mindestens einem Hydroxyl, Halogen, Nitril, Alkyl, Hydroxyalkyl, Alkoxy, Carboxyl oder Carbalkoxy oder gegebenenfalls mindestens einem substituierten Aryl- oder Aralkylrest; $D_1$ bedeutet ferner Polyoxyalkylen; oder einen Rest der Formel

(16a) 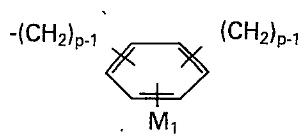 ,

(16b) 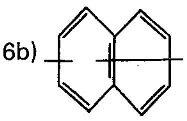 (16c) 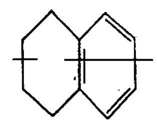 ,

(16d) 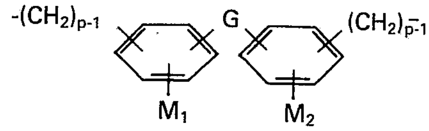 ,

(16e) 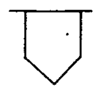 , (16f) 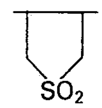 ,

(16g) 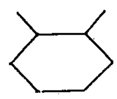 , (16h) 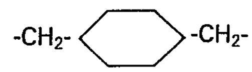

oder

(16i) 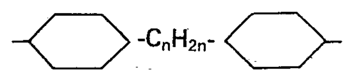

oder zusammen mit den Stickstoffatomen und mindestens je einem der an die Stickstoffatome gebundenen Substituenten einen Rest der Formel

(17a) 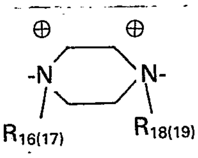 , (17b) 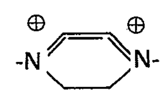

oder

(17c) 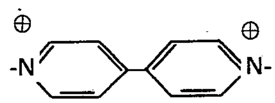

in welchen Formeln

$M_1$ und $M_2$ Wasserstoff, Alkyl, Hydroxy-, oder Halogenalkyl mit 1 bis 4 Kohlenstoffatomen, Hydroxyl, Halogen, Carboxyl, Carbalkoxy oder Phenyl sind,

G die direkte Bindung, -O-, $-\overset{\overset{\displaystyle O}{\|}}{C}-$, -S-, $-SO_2-$ oder gegebenenfalls substituiertes Alkylen,

n eine Zahl von 1 bis 6,

p eine Zahl von 1 bis 3, vorzugsweise 1 oder 2 ist, und

$D_2$ bedeutet einen Rest der Formel

(18a) 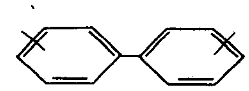 oder

(18b) 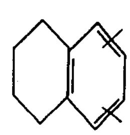

Besonders geeignete polymere quaternäre Ammoniumsalze enthalten die kationischen wiederkehrenden Einheiten der Formel

(19) 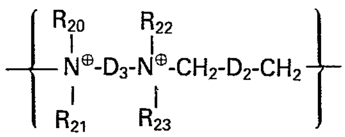

worin $R_{20}$, $R_{21}$, $R_{22}$, $R_{23}$ gleich oder voneinander verschieden sind und Cycloalkyl mit 5 bis 6 Kohlenstoffatomen; Alkyl, Hydroxyalkyl, Cyanoalkyl, Alkoxyalkyl, Alkylthioalkyl und Alkylcarbonylalkyl mit 1 bis 10 Kohlenstoffatomen; Arylcarbonylalkyl, Alkylsulfonylalkyl und Arylsulfonylalkyl mit je 1 bis 4 Kohlenstoffatomen im Alkylteil; Carboxyalkyl mit 1 bis 4 Kohlenstoffatomen im Alkylteil; Carbalkoxyalkyl und Di-(carbalkoxy)-alkyl mit je 1 bis 4 Kohlenstoffatomen im Alkoxy- und Alkylteil; Carbonsäureamidalkyl mit 1 bis 10 Kohlenstoffatomen im Alkylteil und gegebenenfalls N-substituiert mit Niederalkyl oder Aryl; oder Phenyl oder Benzyl sind, gegebenenfalls substituiert mit Hydroxyl, Cyano, Halogen und Carboxyl; Alkyl, Hydroxyalkyl, Cyanoalkyl, Alkoxy und Alkylthio mit 1 bis 4 Kohlenstoffatomen; Alkoxyalkyl, Carbalkoxyalkyl und Di-(carbalkoxy)alkyl mit je 1 bis 4 Kohlenstoffatomen im Alkyl- und Alkoxyteil oder ($R_{20}$ und $R_{21}$) und/oder ($R_{22}$ und $R_{23}$) zusammen mit dem Stickstoffatom, an dem sie gebunden sind, einen gegebenenfalls substituierten heterocyclischen Ring mit 5 oder 6 Ringgliedern bilden, $D_3$ bedeutet $-(CH_2)_m-$, worin m eine Zahl von 1 bis 20 ist, gegebenenfalls unterbrochen durch mindestens eine -S-, 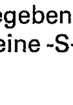 oder -CH=CH-Gruppierung oder substituiert mit mindestens einem Hydroxyl, Chlor, Nitril oder Alkyl, Alkoxy oder Hydroxyalkyl mit 1 bis 4 Kohlenstoffatomen, Carboxyl oder Carbalkoxy mit 1 bis 20, vorzugsweise 1 bis 4 Kohlenstoffatomen im Alkoxyrest oder gegebenenfalls substituierten Phenyl oder Benzylreste; ferner bedeutet $D_3$ für den Fall, dass $R_{20}$ bis $R_{23}$ Methyl ist, einen Rest der Formel

(20) 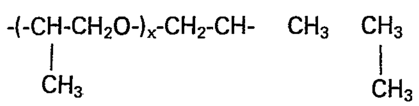

worin x 2,6, 5,6 oder 33,1 ist, oder einen Rest der vorstehend angegebenen Formeln (16a) bis (16i) oder zusammen mit den Stickstoffatomen und mindestens je einem Substituenten, die an die Stickstoffatome gebunden sind, einen Rest der vorstehend angegebenen Formel (17a), worin $R_{16(17)}$ und $R_{18(19)}$ durch $R_{20(21)}$ und $R_{22(23)}$ ersetzt ist, oder der Formeln (17b) oder (17c) ist.

Weiterhin bevorzugt sind insbesondere solche polymeren quaternären Ammoniumsalze, deren kationische wiederkehrende Einheiten der Formel

(20) 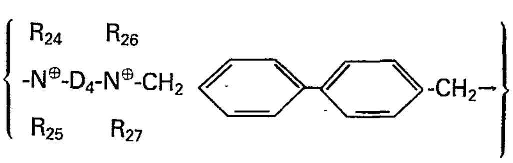

worin $R_{24}$, $R_{25}$, $R_{26}$ und $R_{27}$ gleich oder voneinander verschieden sind und Alkyl oder Hydroxyalkyl mit 1 bis 4 Kohlenstoffatomen, Alkenyl mit 2 bis 4 Kohlenstoffatomen, $CH_3OOCCH_2-$, $C_2H_5OOCCH_2-$ oder Benzyl bedeuten, oder ($R_{24}$ und $R_{25}$) und/oder ($R_{26}$ und $R_{27}$) zusammen mit dem Stickstoffatom, an dem sie gebunden sind, einen Piperidin- oder Morpholinrest bilden und $D_4$ $-(CH_2)_{m1}$, worin $m_1$ eine Zahl von 1 bis 12 ist,
oder für den Fall, dass $R_{24}$ bis $R_{27}$ Methyl ist, einen Rest der Formel

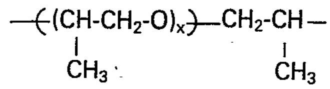

bedeutet, worin x 2,6, 5,6 oder 33,1 ist,
oder $D_4$ steht für eines der folgenden Brückenglieder

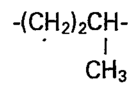 , $-CH_2CH=CHCH_2-$,

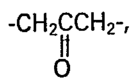 , 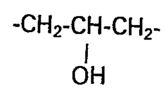 ,

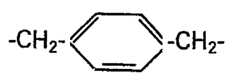 , 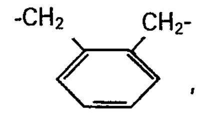 ,

(21h) 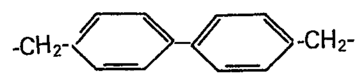 ,

(21i) 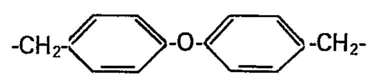 ,

(21j) 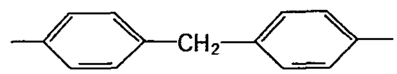

(21k) 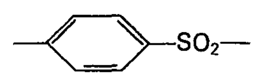 oder

(21l) 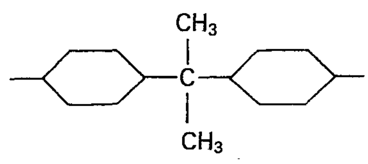

oder zusammen mit den Stickstoffatomen und mindestens je einem der an die Stickstoffatome gebundenen Substituenten ein Rest der vorstehend angegebenen Formeln (17b) oder (17c) oder ein Rest der Formeln

(22a) 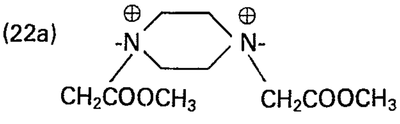 oder

(22b)

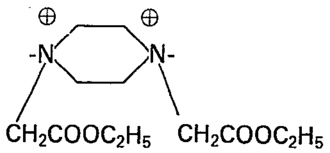

ist.

Im einzelnen seien beispielsweise polymere quaternäre Ammoniumsalze mit kationischen wiederkehrenden Einheiten der folgenden Formeln genannt:

(23)

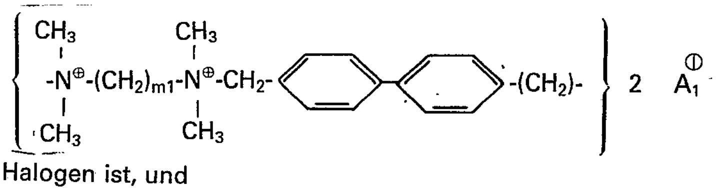

worin $m_1$ 1 bis 12 und $A_1$ Halogen ist, und

(24)

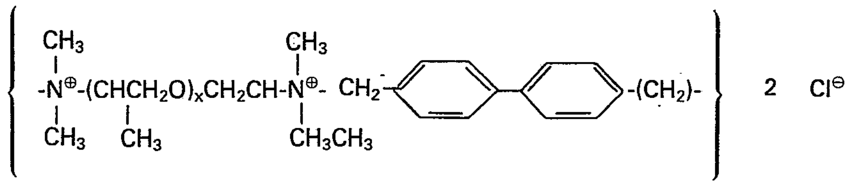

worin x 2,6, 5,6 oder 33,1 ist.

Aus der DE-OS 2657582 sind diese Ammoniumsalze sowie deren Herstellung bekannt. Dieser Offenlegungsschrift ist zu entnehmen, dass sich derartige polymere Verbindungen als Färbereihilfsmittel, vor allem als Egalisiermittel eignen und zwar beim Färben und Bedrucken von Textilmaterialien sowohl aus natürlichen, als auch synthetischen Fasern sowie aus Fasermischungen. Weiter findet sich der Hinweis, dass die polymeren quaternären Ammoniumsalze als kationische Fixiermittel beim Färben von Cellulosematerialien mit Direktfarbstoffen verwendet werden können.

Unter diesen spezifischen Vertretern steht das polymere quaternäre Ammoniumsalz, das kationische wiederkehrende Einheiten der Formel

(25)

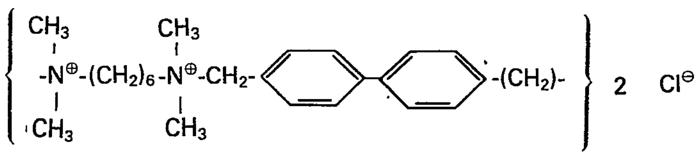

aufweist, im Vordergrund des Interesses.

Polymere quaternäre Ammoniumsalze, die als speziell bevorzugte Egalisiermittel geeignet sind, sind Salze, die kationische wiederkehrende Einheiten der Formel

(26)

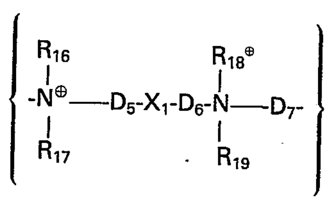

enthalten, worin $R_{16}$, $R_{17}$, $R_{18}$ und $R_{19}$ die angegebene Bedeutung haben, $D_5$ und $D_6$ $-C_nH_{2n}-$, worin n 1 bis 12 und die Summe von n in $D_5$ und $D_6$ mindestens 3 beträgt, und für n gleich 1 die Bindung zum Brückenglied $X_1$ nicht über ein Stickstoff- oder Sauerstoffatom erfolgt, oder ein aromatisches Brückenglied sind, und $D_5$ und $D_6$ gleich oder voneinander verschieden sind, $D_7$ ein Rest der Formeln

(27) $-C_{m2}H_{2m2}-$ , (27a) $-CH_2-O-G_1-OCH_2-$ , (27b) $-CH_2(O-G_2)_{p1}OCH_2-$ ,

(27c) $-CH_2COCH_2-$ , (27d) $-CH_2-CHOHCH_2-$ , (27e)

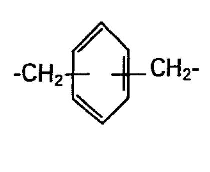

,

(27f)

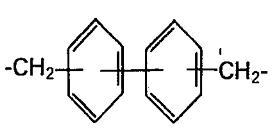

(27g)

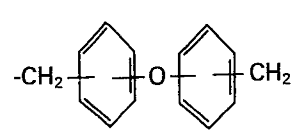

oder (27h)

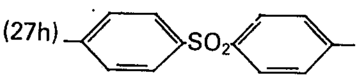

ist, worin

$G_1$ geradkettiges oder verzweigtes, gegebenenfalls mit Halogen substituiertes Alkylen mit 2 bis 12 Kohlenstoffatomen, $G_2$ Äthylen, Isopropylen oder n-Butylen, $m_2$ 2 bis 12 und $p_1$ 2 bis 15 sind, und $X_1$ ein zweiwertiges Brückenglied der Formeln

(28a) -NHCONH- , (28b) $-NHCOX_2CONH-$ (28c) -CONH- , (28d) -OCONH- ,

(28e) -COO- , (28f) $-COX_3CO-$ , (28g) 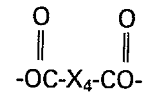 oder

(28h) 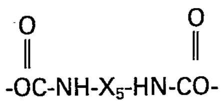

ist, worin $X_2$ die direkte Bindung, Alkylen, Alkenylen, Arylen bzw. Heteroarylen, Diaminoalkylen, Diaminoarylen, gegebenenfalls halogensubstituiertes Dioxyalkylen, Polyoxyalkylenoxy oder Dioxyarylen, $X_3$ Diaminoalkylen, gegebenenfalls halogensubstituiertes Dioxyalkylen, Polyoxyalkylenoxy oder gegebenenfalls halogensubstituiertes Dithioalkylen ist, $X_4$ Arylen und $X_5$ Alkylen oder Arylen ist.

Besonders geeignete polymere quaternäre Ammoniumsalze enthalten kationische wiederkehrende Einheiten, welche der Formel

(29) 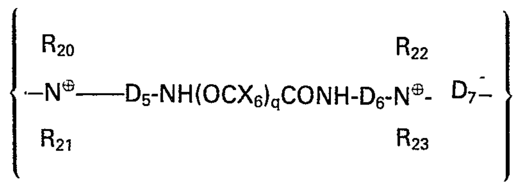

entsprechen, worin $R_{20}$, $R_{21}$, $R_{22}$ und $R_{23}$ die in der Formel (19) vorstehend angegebenen Bedeutungen haben, $X_6$ $-C_rH_{2r}-$, worin r eine ganze Zahl von 1 bis 12 ist, $-(CH=CH-)_s$, worin s 1 oder 2 ist, ein Rest der vorstehend angegebenen Formel (16b) oder ein Rest der Formel (30a) $-NH(CH_2)_mNH-$, worin m 2 bis 12 ist,

(30b) 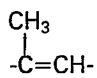 , (30c) 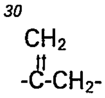 , (30d) 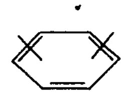

(30e) 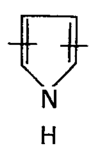 (30f) 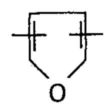 (30g) 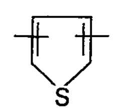

(30h) 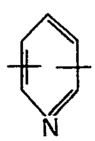 , (30i) 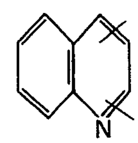 ,

(30j) 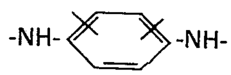 oder (30k) 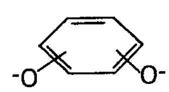

worin die aromatischen Ringe mit Halogen, Alkyl und/oder Alkoxy substituiert sein können, ferner der Formel

(30l) 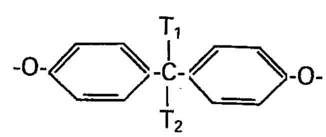

worin $T_1$ und $T_2$ je Wasserstoff oder Methyl sind, und der Formel (30m) $-OG_1O-$ oder (30n) $-(OG_2)_{p1}O-$ ist, worin $G_1$, $G_2$, $p_1$ und $D_5$, $D_6$ und $D_7$ die angegebenen Bedeutungen haben und q 0 oder 1 ist.

Weitere interessante Verbindungen sind solche mit kationischen wiederkehrenden Einheiten der Formel (29), in denen $X_6$ die direkte chemische Bindung und q gleich 1 ist und die vorzugsweise kationische wiederkehrende Einheiten der Formel

(31)

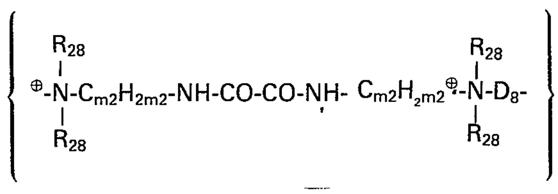

enthalten, worin $R_{28}$ Alkyl mit 1 bis 4 Kohlenstoffatomen, $D_8$ $-C_{m3}H_{2m3}-$ oder ein Rest der Formeln

(32a)

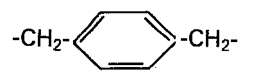

,

(32b)

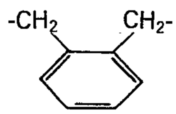

oder (32c)

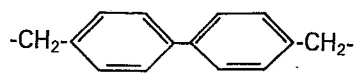

,

$m_2$ 2 bis 12 und $m_3$ 2 bis 6 ist.

Bevorzugt sind ferner auch die polymeren quaternären Ammoniumsalze, deren kationische wiederkehrende Einheiten der Formel

(33)

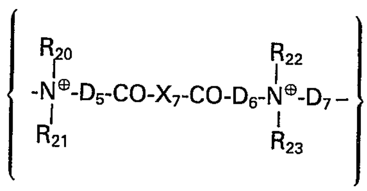

entsprechen, worin $X_7$ ein Rest der Formel (30m) oder (30n) oder $-S(CH_2)_{m2}$ S- oder $-NH(CH_2)_{m2}$ NH- ist, und $m_2$, $D_5$, $D_6$, $D_7$, $R_{20}$, $R_{21}$, $R_{22}$ und $R_{23}$ die angegebenen Bedeutungen haben, oder deren kationische wiederkehrende Einheiten der Formel

(34)

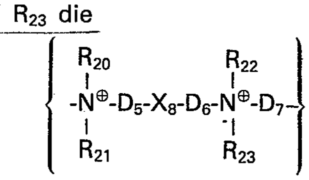

entsprechen, worin $X_8$ -CONH-, -OCONH- oder -COO- ist und $D_5$, $D_6$, $D_7$ und $R_{20}$, $R_{21}$, $R_{22}$ und $R_{23}$ die angegebenen Bedeutungen haben.

Besonders geeignete Vertreter mit wiederkehrenden Einheiten der Formel (34) sind solche, deren kationische wiederkehrende Einheiten der Formel

(35)

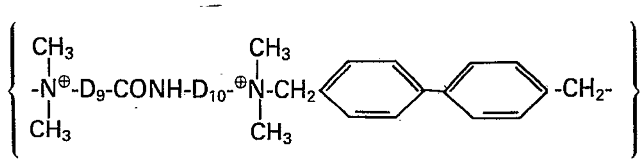

entsprechen, worin $D_9$ Alkylen mit 1 bis 4 Kohlenstoffatomen oder Phenylen und $D_{10}$ Alkylen mit 2 bis 6 Kohlenstoffatomen oder Phenylen ist.

Eine weitere Gruppe gut geeigneter polymerer quaternärer Ammoniumsalze enthält die kationischen wiederkehrenden Einheiten der Formel

(36)

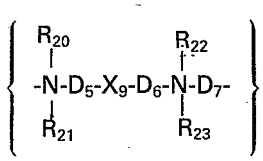

worin $X_9$ ein Rest der Formeln

(37a)

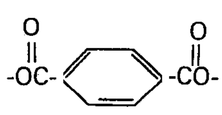

,

(37b)

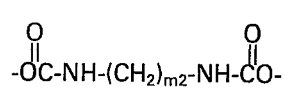

oder

(37c)

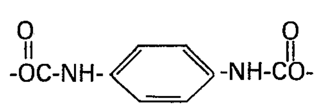

und

$m_2$ 2 bis 12 ist und $D_5$, $D_6$, $D_7$, $R_{20}$, $R_{21}$, $R_{22}$ und $R_{23}$ die angegebenen Bedeutungen haben.

Ganz besonders vorteilhaft sind ausserdem die polymeren quaternären Ammoniumsalze, deren kationische wiederkehrende Einheiten der Formel

(38) 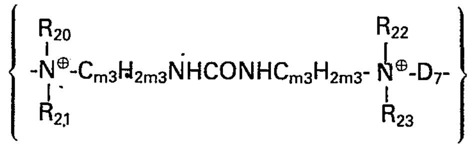

entsprechen, worin $m_3$, $D_7$, $R_{20}$, $R_{21}$, $R_{22}$ und $R_{23}$ die angegebenen Bedeutungen haben, vorzugsweise der Formel

(39) 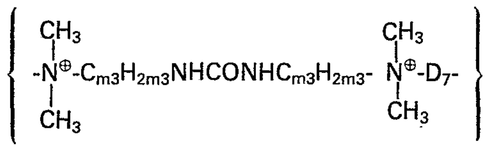

worin $D_7$ und $m_3$ die angegebenen Bedeutungen haben, oder insbesondere der Formel

(40) 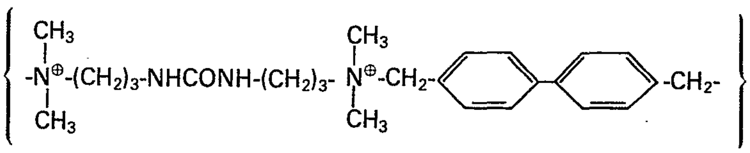 2 $Cl^{\ominus}$

entsprechen.

Diese Ammoniumsalze sowie deren Herstellung sind bekannt und z. B. in der deutschen Offenlegungsschrift 2824743 beschrieben. Als spezifische Vertreter der wiederkehrenden Einheiten dieser polymeren quaternären Ammoniumsalze sei auf die in der genannten Offenlegungsschrift offenbarten Polymerbausteine der Formeln (101) bis (138) hingewiesen. Die Ammoniumsalze mit diesen wiederkehrenden Einheiten eignen sich alle im erfindungsgemässen Verfahren als Egalisiermittel eingesetzt zu werden, wie dies für die kationischen Einheiten der Formel (40) aufweisende Ammoniumsalz der Fall ist.

Als Anionen für die polymeren quaternären Ammoniumsalze, die wiederkehrende Einheiten der Formeln (15) bis (40) aufweisen, sind alle üblichen anorganischen oder organischen Anionen geeignet, die mit den Kationen keine schwerlöslichen Komplexe bilden, da die Ammoniumsalze vorzugsweise wasserlöslich sein sollen. Genannt seien z. B. die Anionen der Mineralsäuren oder von niedermolekularen organischen Säuren. Geeignet sind z. B. die Halogenanionen wie $J^{\ominus}$, $Br^{\ominus}$ und insbesondere $Cl^{\ominus}$, Methylsulfat ($CH_3SO_4^{\ominus}$), Äthylsulfat ($C_2H_5SO_4^{\ominus}$), Toluolsulfonat, Nitrat und Sulfat.

Im allgemeinen weisen diese polymeren quaternären Ammoniumsalze Molekulargewichte von 1000 bis 100000, vorzugsweise von 2000 bis 50000, und insbesondere von etwa 4000 bis etwa 20000 auf. In der Regel sind sie in Wasser löslich.

Das definitionsgemässe Egalisiermittel wird im erfindungsgemässen Verfahren in Mengen von 0,01 bis 5 Gew.-%, insbesondere 0,1 bis 0,5 Gew.-%, bezogen auf das cellulosehaltige Fasermaterial bzw. Papier dem Vorbehandlungs- resp. Färbebad zugesetzt.

Das Verfahren kann kontinuierlich oder vorzugsweise als Ausziehverfahren grundsätzlich nach 2 Möglichkeiten ausgeführt werden:

a) Man gibt das cellulosehaltige Fasermaterial in eine wässrige Flotte, welche 0,01–5 Gew.-%, insbesondere 0,1–0,5 Gew.-% des definitionsgemässen kationischen oder basischen Egalisiermittels neben mindestens einem definitionsgemässen Farbstoff enthält, erhöht die Temperatur des Färbebades innerhalb von z. B. 30 bis 60 min bis zum Siedepunkt und färbt während ca. 30 bis 90 min; oder

b) man behandelt das Färbegut zunächst mit einer wässrigen Flotte vor, die mindestens ein kationisches oder basisches Egalisiermittel in den angegebenen Mengen enthält, und setzt anschliessend dieser Flotte mindestens einen definitionsgemässen kationischen bzw. basischen Farbstoff zu und färbt sodann das Färbegut. Das Färbegut wird dabei bei einer Temperatur zwischen 10 und 130°C, insbesondere zwischen 20 und 50°C während 1 bis 120 min, insbesondere 10 bis 20 min mit der wässrigen Lösung des kationischen bzw. basischen Egalisiermittels vorbehandelt, und nach der Zugabe des definitionsgemässen Farbstoffes innerhalb von 10 bis 180 min, vorzugsweise innerhalb von 30 bis 60 min auf 40 bis 130°C, insbesondere 80 bis 100°C aufgeheizt. Dieses Verfahren stellt die bevorzugte Ausführungsform dar.

Sodann wird – in beiden Fällen – das gefärbte Cellulosematerial wie üblich fertiggestellt, wobei ein einfaches Spülen genügt und ein Seifungsprozess nicht mehr nötig ist im Gegensatz zu den meisten heute bekannten Färbeverfahren für Cellulosetextilmaterialien.

Der pH-Wert der Vorbehandlungs- und/oder Färbeflotte liegt zwischen 3 und 11, vorteilhaft

zwischen 4 und 7, im besonderen um pH 4.

Als cellulosehaltige Fasermaterialien kommen vor allem solche textiler Natur in Frage, wie solche aus natürlicher Cellulose, z. B. Baumwolle, Hanf, Leinen, Jute, Ramie oder regenerierter Cellulose, wie Rayon, Viskosecellulose oder Kupferkunstseide, wobei diese Materialien in beliebigen Verarbeitungsstadien, wie z. B. als loses Material (Kammzug) oder in Form von Fäden, Garnen, Geweben oder Gewirken vorliegen können.

Des weiteren kann das erfindungsgemässe Verfahren auch zum Färben von Papier eingesetzt werden.

Mittels des erfindungsgemässen Verfahrens ist es somit möglich, nicht tannierte, textile Cellulosematerialien ohne zusätzliche Salzzugabe aus einem elektrolytarmen Färbebad, d. h. einem Färbebad, das zwischen 0 und ca. 5 g/l Elektrolyt herrührend vom natürlichen Salzgehalt des Wassers und/oder vom Farbstoff-Stellmittel enthält, zu färben, wobei keine Einbusse im Aufbau oder im Ausziehgrad der definitionsgemässen Farbstoffe feststellbar ist.

Im Gegensatz zu den herkömmlichen Direkt- und nachkupferbaren Direktfarbstoffen sowie Reaktiv-, Schwefel- und Küpenfarbstoffen, welche üblicherweise zum Färben von Cellulosematerialien verwendet werden, wird also auf den Zusatz eines Elektrolyten verzichtet. Dies ist ein wesentlicher Vorteil, da üblicherweise grosse Mengen, bei Küpen- und Direktfarbstoffen bis zu 20 g/l und bei Reaktivfarbstoffen z. T. über 100 g/l an Natriumsulfat oder Natriumchlorid dem Färbebad zugegeben werden müssen, damit ein wirtschaftlicher Ausziehgrad erreicht wird.

Ferner eignet sich das erfindungsgemässe Verfahren vor allem für die Di-, Tri- bzw. Polychromiefärbung, indem dem Färbebad mindestens zwei, drei oder mehrere der definitionsgemässen Farbstoffe zugesetzt werden. Die Färbungen zeichnen sich durch eine sehr gute Reproduzierbarkeit der Nuance aus. Dies ist ein wesentlicher Vorteil, da die heutigen Direkt-, Küpen- und Reaktivfarbstoffe ein sehr heterogenes Verhalten in Anwesenheit von Elektrolyten aufweisen, womit eine sichere, reproduzierbare Di- oder Trichromie-Färbung mit diesen anionischen Farbstoffen nur wenig möglich ist. Die Möglichkeit einer Anwendung des Trichromie-Prinzipes auch bei der Färbung von cellulosischen Textilien bzw. Papier bedeutet einen grossen Fortschritt in Richtung einer rationelleren Färbeweise.

Das nach dem erfindungsgemässen Verfahren gefärbte cellulosehaltige Fasermaterial und Papier zeichnet sich aus durch eine egale Ausfärbung von hellen bis dunklen Tönen, durch einen hohen Ausziehgrad der Farbstoffe, der bei hellen bis mittleren Nuancen bis 100% erreichen kann, durch eine grosse Nassechtheit, die z. T. das Niveau einer Küpen-, bzw. Reaktivfärbung erreichen kann und durch eine gute Reproduzierbarkeit der Nuance.

Die folgenden Beispiele veranschaulichen die Erfindung, ohne sie darauf zu limitieren. Temperaturen sind in Grad Celsius angegeben und Teile bedeuten, sofern nichts anderes angegeben ist, Gewichtsteile.

Beispiel 1

10 T. Baumwollgewebe (gebleichte, mercerisierte Baumwolle) werden in einem Labor-Baumfärbeapparat in 200 T. einer wässrigen Flotte (Wasserhärte 10 dH, pH 6, 3 Umwälzungen der Färbeflotte pro min), die als Egalisiermittel 0,02 T. eines quaternären, polymeren Ammoniumsalzes, welches kationische wiederkehrende Einheiten der Formel (25) und ein mittleres Molekulargewicht von 12000 aufweist, enthält, bei 40° während 15 min vorbehandelt. Anschliessend werden der Flotte 0,002 T. des Farbstoffes der Formel

(41)

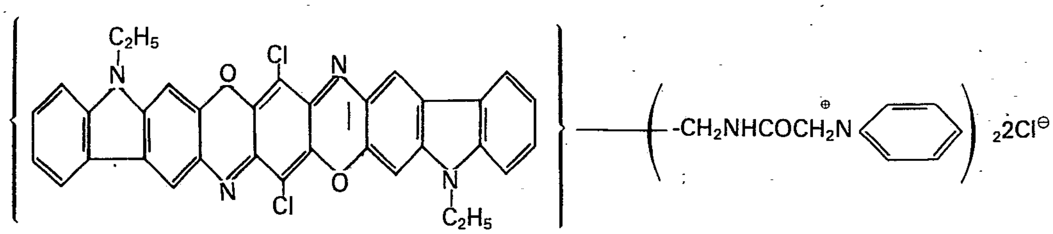

zugegeben, wobei die Temperatur 15 min bei 40° gehalten wird. Man heizt dann in 40 min auf 80° auf. Es entsteht dabei ein regelmässiger Farbstoffaufbau auf der Faser. Am Ende der Aufheizphase ist die Flotte praktisch farblos. Der Ausziehgrad beträgt ca. 99%. Die Flotte wird dann abgekühlt, und das Gewebe gespült und getrocknet. Die erhaltene brillante, hellblaue Färbung zeichnet sich durch eine gute Lichtechtheit, eine einwandfreie Egalität und vor allem durch eine hervorragende Nassechtheit aus, die dem Standard einer Färbung mit Küpen- bzw. mit Reaktivfarbstoffen entspricht.

Ähnliche Ergebnisse werden erzielt, wenn man als Egalisiermittel ein quaternäres, polymeres Ammoniumsalz einsetzt, das kationische wiederkehrende Einheiten der Formel (15) enthält.

Wird jedoch auf die Vorbehandlung mit dem Egalisiermittel verzichtet, so zieht der Farbstoff in weniger als 5 min vollständig aus, was zu einer sehr unegalen, für praktische Zwecke unbrauchbaren Färbung führt.

Beispiel 2

10 T. Baumwollgewebe (gebleichte, mercerisierte Baumwolle) werden in einem Labor-Färbeapparat (Pretema Multicolor) in 200 T. einer wässrigen Flotte (Wasserhärte 8 dH, pH 7) die als Egalisiermittel 0,02 T. eines quaternären, polymeren Ammoniumsalzes, welches kationische wiederkehrende Einheiten der Formel (40) aufweist, enthält, bei 40° während 15 min vorbehandelt. Anschliessend werden der Flotte 0,005 T. des Farbstoffes der Formel

(42)

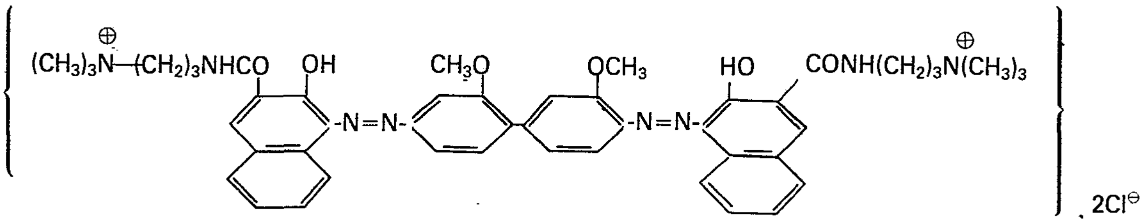

zugegeben, wobei die Temperatur 15 min bei 40° gehalten wird. Es wird dann in 40 min auf 80° aufgeheizt. Es entsteht ein regelmässiger Farbaufbau. Am Ende der Aufheizphase ist die Flotte ausgezogen (Ausziehgrad ca. 100%). Nach dem Abkühlen, Spülen und Trocknen erhält man eine rotstichige, hellblaue Färbung, die durch eine einwandfreie Egalität und eine hervorragende Nassechtheit gekennzeichnet ist.

Änliche Resultate werden erzielt, wenn man als Egalisiermittel ein quaternäres, polymeres Ammoniumsalz einsetzt, das kationische wiederkehrende Einheiten der Formel (26) enthält.

Wird jedoch auf die Vorbehandlung mit dem Egalisiermittel verzichtet, so fällt die Färbung sehr unegal aus und ist für praktische Zwecke unbrauchbar.

Beispiel 3

Man verfährt wie im Beispiel 1, setzt jedoch 0,03 T. (statt 0,002 T.) des angegebenen Farbstoffes dem Bad zu. Am Ende der Aufheizphase ist das Färbebad praktisch ausgezogen. Die erhaltene brillante und farbstarke neutralblaue Färbung zeichnet sich durch eine sehr gute Lichtechtheit, eine einwandfreie Egalität und vor allem durch eine hervorragende Nassechtheit aus.

Beispiel 4

10 T. Baumwollgewebe (nicht mercerisierte Popeline) werden in einem Labor-Baumfärbeapparat in 250 T. einer wässrigen Flotte (Wasserhärte 8 dH, pH 7,5), die als Egalisiermittel 0,02 T. eines quaternären, polymeren Ammoniumsalzes, welches kationische wiederkehrende Einheiten der Formel (40) aufweist, enthält, bei 40° während 10 min vorbehandelt. Anschliessend wird der Flotte 0,1 T. des Farbstoffes der Formel

(43)

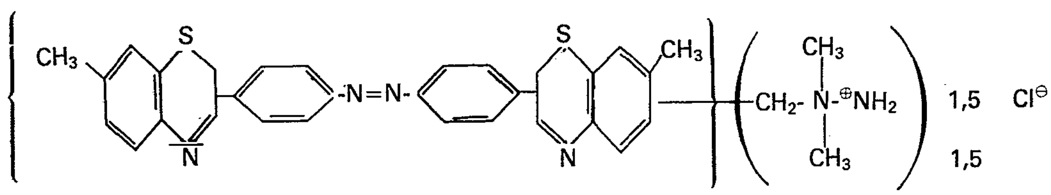

zugegeben, wobei die Temperatur 5 min bei 40° gehalten wird. Man heizt dann innerhalb von 30 min auf 100° auf, und färbt bei 100° noch 30 min weiter. Es entsteht dabei ein regelmässiger Farbstoffaufbau auf der Faser. Der Ausziehgrad beträgt über 95%. Die Flotte wird abgekühlt und das Gewebe gespült und getrocknet. Die erhaltene farbstarke Gelbnuance zeichnet sich durch eine sehr gute Lichtechtheit, eine einwandfreie Egalität und durch eine sehr gute Nassechtheit aus.

Beispiel 5

10 T. Baumwollgewebe (mercerisiert, gebleicht) werden wie in Beispiel 4 behandelt. Die 0,1 T. des angegebenen Farbstoffes werden jedoch durch 0,03 T. des Farbstoffes der Formel

(43a)

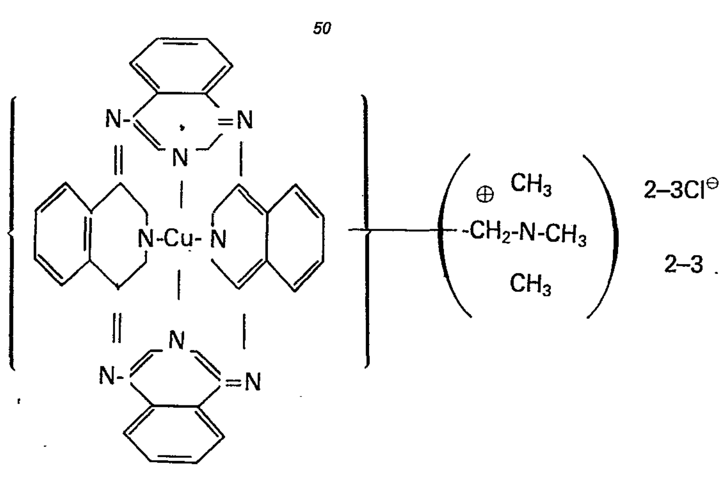

ersetzt. Der Ausziehgrad beträgt ca. 98%. Die Faser ist in einem mittleren Türkis gefärbt. Die Färbung ist egal, lichtecht und hervorragend nassecht.

Beispiel 6

10 T. Baumwollgewebe (mercerisiert, gebleicht) werden wie in Beispiel 4 behandelt. Statt 0,1 T. des angegebenen Farbstoffes werden jedoch 0,1 T. des Farbstoffes der Formel

(43) 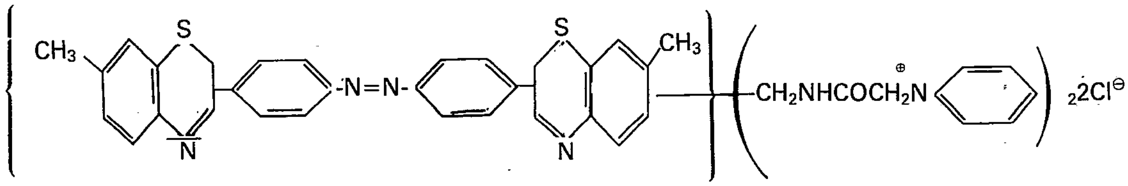

eingesetzt. Das Färbebad ist über 90% ausgezogen. Die erhaltene brillante und farbstarke gelbe Färbung zeichnet sich durch eine sehr gute Lichtechtheit, eine einwandfreie Egalität und vor allem durch eine hervorragende Nassechtheit (Küpen- bzw. Reaktivfarbstoff-Standard) aus.

Beispiel 7

Man verfährt wie in Beispiel 4. Statt 0,1 T. des angegebenen Farbstoffes werden jedoch 0,05 T. des Farbstoffes der Formel

(45) 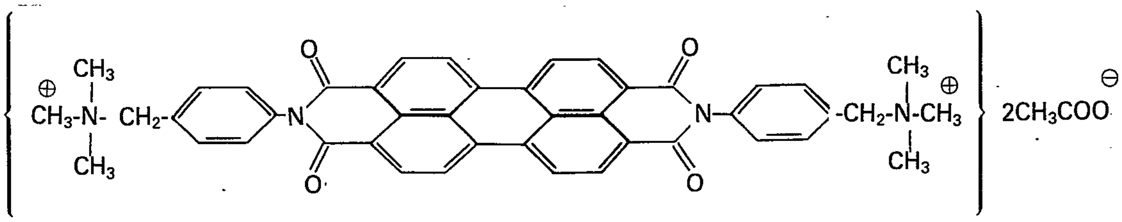

dem Färbebad zugesetzt. Am Ende der Aufheizphase ist das Färbebad völlig ausgezogen. Die erhaltene mittlere Rotnuance ist egal, lichtecht und hervorragend nassecht.

Verwendet man äquimolekulare Teile der in folgender Tabelle angegebenen Farbstoffe anstelle der 0,1 T. des angegebenen Farbstoffes gemäss Beispiel 4 bei im übrigen gleicher Arbeitsweise, so erhält man ebenfalls egale Ausfärbungen, deren Nuance auf Baumwolle in der rechten Kolonne angegeben ist.

| Beispiel Nr. | Farbstoff (Formel Nr.) | Nuance auf Baumwolle |
|---|---|---|
| 8 | 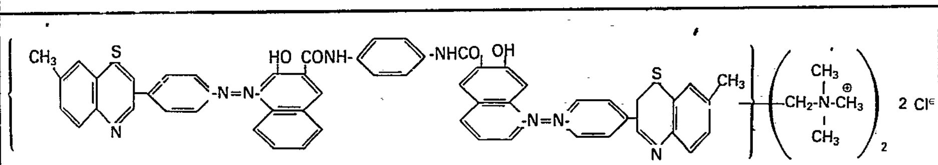 (46) | rot |
| 9 | 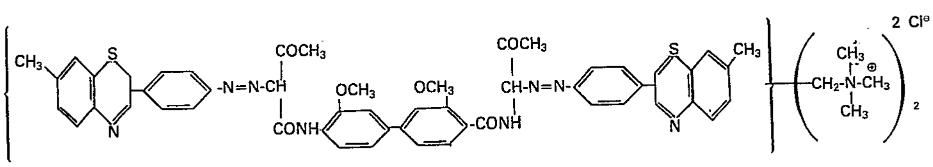 (47) | gelb |
| 10 | 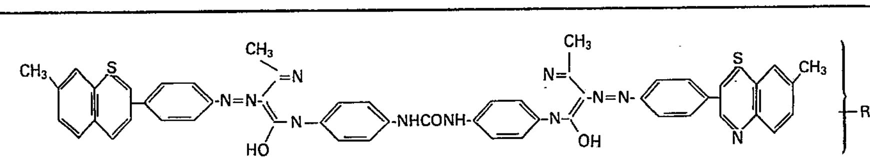 R= 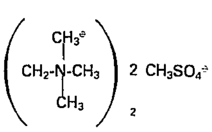 (48) | gelb |

| Beispiel Nr. | Farbstoff (Formel Nr.) | Nuance auf Baumwolle |
|---|---|---|
| 11 | 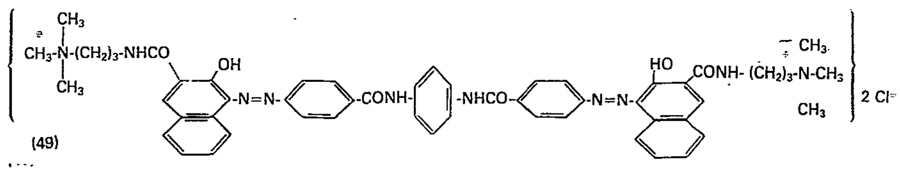 (49) | rotviolett |
| 12 | 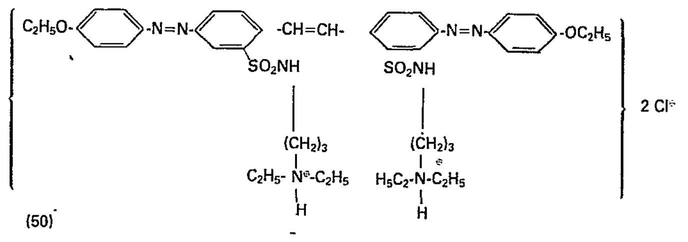 (50) | gelb |
| 13 | 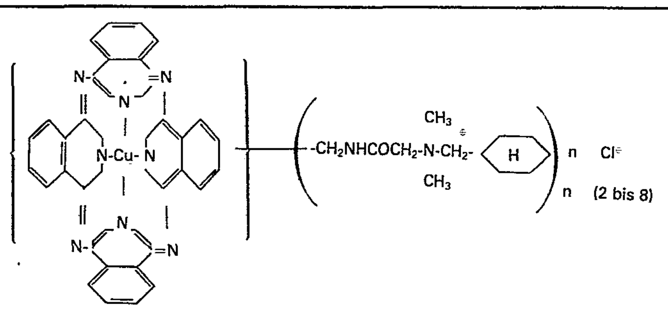 | türkis |

Beispiel 14

10 T. Baumwollgewebe (mercerisiert, gebleicht) werden in einem Labor-Baumfärbeapparat in 200 T. einer Flotte (Wasserhärte 9 dH, pH 6, 3 Umwälzungen der Färbeflotte pro min), die als Egalisiermittel 0,02 T. eines quaternären, polymeren Ammoniumsalzes, welches kationische wiederkehrende Einheiten der Formel (25) und ein mittleres Molekulargewicht von 12000 aufweist, enthält, bei 40° während 15 min behandelt. Anschliessend werden der Flotte 0,002 T. des Farbstoffes der Formel (41) und 0,002 T. des Farbstoffes der Formel

(52)

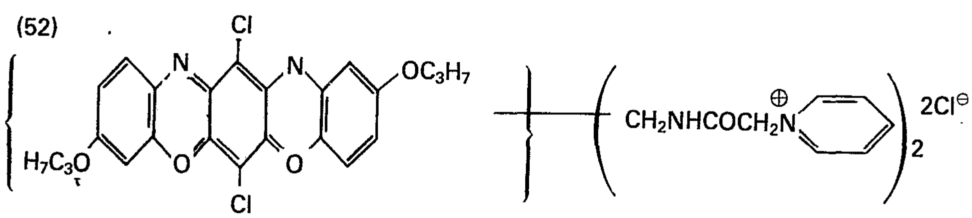

zugegeben, wobei die Temperatur 15 min bei 40° gehalten wird. Man heizt dann in 40 min auf 80° auf. Es entsteht dabei ein regelmässiger Aufbau der beiden Farbstoffe und der Faser. Die beiden Farbstoffe ziehen Ton in Ton auf. Der Ausziehgrad der beiden Farbstoffe beträgt mindestens 99% am Ende der Aufheizphase.

Die Flotte wird dann abgekühlt und das Gewebe gespült und getrocknet. Die erhaltene blasse lila Färbung zeichnet sich durch eine gute Lichtechtheit, eine einwandfreie Egalität und vor allem durch eine hervorragende Nassechtheit aus.

Die Färbung wurde bei den verschiedensten Wasserhärten und pH-Werten, wie sie in natürlichem Wasser vorkommen können, wiederholt (Wasserhärte-Bereich 0–20 dH, pH-Bereich 5–8). Es konnte keine nennenswerte Nuancenverschiebung festgestellt werden.

Beispiel 15

Man verfährt wie im Beispiel 14, setzt jedoch 0,02 T. des Farbstoffes der Formel (44) und 0,01 T. des Farbstoffes der Formel (42) ein. Die Aufheizphase (40–80°) beträgt 60 min.

Es entsteht ein regelmässiger, Ton-in-Ton-Aufbau der beiden Farbstoffe.

Die Färbeflotte ist praktisch vollständig erschöpft. Die erhaltene grüne Nuance zeichnet sich

durch eine einwandfreie Qualität und eine hervorragende Nassechtheit aus.

Beispiel 16

10 T. mercerisierter gebleichter Baumwolle werden in einer Haspelkufe in 200 T. einer wässrigen Flotte (Wasserhärte ca. 10° dH, pH 5), die 0,2 T. eines handelsüblichen nichtionischen Netzmittels (äthoxyliertes Nonylphenol) und 0,02 T. eines handelsüblichen (teilweise anionischen) Antischaum- und Entlüftungsmittels (Albegal FFD) enthält, bei 50° während 30 min benetzt. Danach wird in der selben Flotte 0,05 T. des kationischen Polymers der Formel

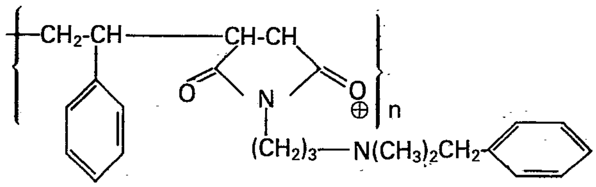

(mittleres Molekulargewicht ca. 10000) zugegeben und weitere 20 min bei 50° einwirken gelassen. Anschliessend werden der Flotte 0,001 T. des im Beispiel 1 benützten Farbstoffes zugegeben, wobei man innerhalb von 30 min auf 100° aufheizt und weitere 30 min bei dieser Temperatur bleibt. Die Flotte wird dann abgekühlt und das Material gespült und getrocknet. Der Ausziehgrad beträgt über 95% (ohne dass ein Elektrolyt wie $Na_2SO_4$ zugegeben werden musste). Die erhaltene brillante hellblaue Färbung zeichnet sich durch eine gute Flächenegalität, eine gute Lichtechtheit und eine hervorragende Nassechtheit aus.

**Patentansprüche**

1. Verfahren zum Färben von cellulosehaltigen Fasermaterialien mit einer wässrigen Färbeflotte, enthaltend mindestens einen kationischen oder basischen Farbstoff, dadurch gekennzeichnet, dass Farbstoffe verwendet werden, die

a) über mindestens ein System an delokalisierten π-Elektronen verfügen, das aus mindestens 9 konjugierten, in einer Ebene liegenden Doppelbindungen besteht, und

b) eine planare Molekülstruktur besitzen, wobei vor oder während der Färbung dieses Material mit mindestens einem kationischen oder basischen polymeren Egalisiermittel behandelt wird, welches mindestens eine Amino-, Ammonium-, Sulfonium- oder Phosphoniumgruppe enthält, wobei die Aminogruppe unter Anwendungsbedingungen in protonierter Form vorliegt.

2. Verfahren gemäss Anspruch 1, dadurch gekennzeichnet, dass man als kationischen oder basischen Farbstoff einen solchen verwendet, der mindestens 12 ununterbrochen konjugierte, in einer Ebene liegende Doppelbindungen enthält.

3. Verfahren gemäss Anspruch 1 oder 2, dadurch gekennzeichnet, dass die kationischen bzw. basischen Farbstoffe 1 bis 8 kationische bzw. basische Gruppen enthalten.

4. Verfahren gemäss Anspruch 3, dadurch gekennzeichnet, dass die kationischen bzw. basischen Farbstoffe 1 bis 3 kationische bzw. basische Gruppen enthalten.

5. Verfahren gemäss Anspruch 1, dadurch gekennzeichnet, dass als Farbstoff ein solcher der Formel

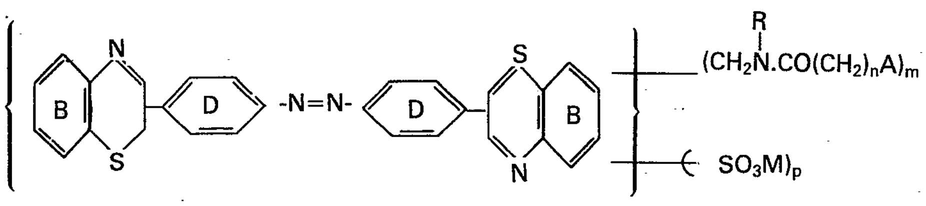

verwendet wird, worin bedeuten:

R Wasserstoff oder eine Alkylgruppe mit 1 bis 4 C-Atomen,

A einen gegebenenfalls quaternisierten basischen Rest,

n die Zahlen 1 bis 4,

m die Zahlen von 1 bis 4,

M Wasserstoff oder ein Kation,

p die Zahlen 0 bis 2, mit der Bedingung, dass m gleich gross oder grösser ist als p und worin die Benzolreste B und D ein- oder mehrmals, gleich oder verschieden weitersubstituiert sein können.

6. Verfahren gemäss Anspruch 1, dadurch gekennzeichnet, dass als Farbstoff ein solcher der Formel

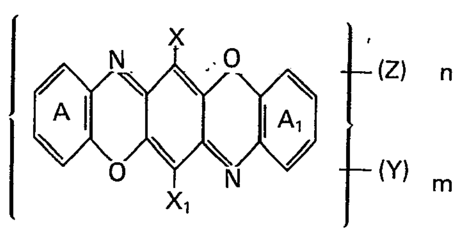

verwendet wird, worin bedeuten:

Z eine gegebenenfalls quaternisierte basische Gruppe;

Y eine anionische Gruppe;

X und $X_1$ unabhängig voneinander gleiche oder verschiedene Substituenten aus der Klasse: Wasserstoff, Halogen, CN, gegebenenfalls substituiertes Alkyl ($C_1$–$C_4$); gegebenenfalls substituiertes Phenyl; $NHCOR_1$, worin $R_1$ Alkyl ($C_1$–$C_4$), Cycloalkyl, gegebenenfalls substituiertes Aryl oder einen heterocyclischen Rest darstellt; $OCOR_2$, worin $R_2$ gegebenenfalls substituiertes Alkyl ($C_1$–$C_4$) oder Cycloalkyl bedeuet; oder

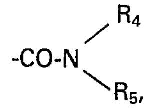

worin $R_4$ und $R_5$ unabhängig voneinander bedeuten: Wasserstoff, gegebenenfalls substituiertes Alkyl ($C_1$–$C_4$), Cycloalkyl oder Aryl oder $R_4$ bildet zusammen mit $R_5$ unter Einschluss des N-Atoms einen heterocyclischen Ring oder X und $X_1$ bedeuten die Gruppe $COOR_6$, worin $R_6$ Wasserstoff, gegebenenfalls substituiertes Alkyl oder Cycloalkyl darstellt:

n die Zahlen von 1 bis 4;

m die Zahlen 0 bis 2 mit der Bedingung, dass die Zahl m kleiner ist als n, und worin die Benzoreste A und $A_1$ gleich oder verschieden, ein- oder mehrmals weitersubstituiert sein können.

7. Verfahren gemäss Anspruch 1, dadurch gekennzeichnet, dass als Farbstoff ein solcher der Formel

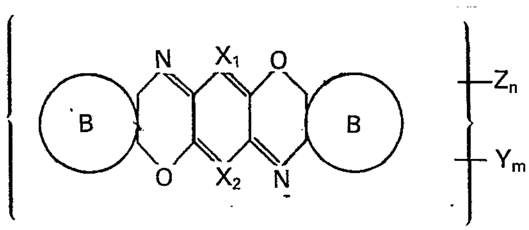

verwendet wird, worin bedeuten:

$X_1$ und $X_2$ unabhängig voneinander eine unverzweigte oder verzweigte Alkylgruppe mit 1 bis 4 Kohlenstoffatomen, eine gegebenenfalls substituierte Phenylgruppe, Halogen, Wasserstoff, Cyan, eine gegebenenfalls im Phenylrest substituierte Phenylaminogruppe, die $CONH_2$-Gruppe, die CONH-phenyl-gruppe, welche im Phenylrest substituiert sein kann oder eine COO-Alkyl($C_1$–$C_4$)-gruppe;

Z eine gegebenenfalls quaternisierte basische Gruppe;

Y eine anionische Gruppe;

B unabhängig voneinander ein ankondensiertes Ringsystem mit 2 bis 4 carbocyclischen und/oder heterocyclischen Ringen, welches ausser den Substituenten Z und Y gegebenenfalls noch weitersubstituiert sein kann;

n die Zahlen von 1 bis 4 und

m die Zahlen von 0 bis 2 mit der Bedingung, dass man nicht grösser als n ist.

8. Verfahren gemäss einem der Ansprüche 1 bis 7, dadurch gekennzeichnet, dass das polymere Egalisiermittel Ammoniumgruppen enthält.

9. Verfahren gemäss Anspruch 8, dadurch gekennzeichnet, dass das polymere ammoniumgruppenhaltige Egalisiermittel ein Copolymerisat aus Maleinsäureanhydrid und Äthylen oder Styrol, welches mit einem n-Alkylamin mit 2 oder 3 Kohlenstoffatomen umgesetzt ist, das endständig am Alkylrest durch Alkylamino mit 1 bis 4 Kohlenstoffatomen oder durch ein cyclisches, 4 oder 5 Ringkohlenstoffatome und gegebenenfalls 1 Sauerstoffatom aufweisendes cyclisches Amin substituiert ist, oder ein Homopolymerisat eines gegebenenfalls durch Methyl oder Äthyl substituierten Vinylpyridins enthält, wobei das Homo- oder Copolymerisat mit einem Halogenmethylnaphthalin oder -diphenyl, mit Chloracetamid oder Chloracetonitril, oder mit einem gegebenenfalls durch Halogen, Methyl oder Äthyl substituierten Benzylhalogenid oder mit einem Alkyl- oder Alkenylhalogenid mit höchstens 4 Kohlenstoffatomen quaterniert ist.

10. Verfahren gemäss Anspruch 9, dadurch gekennzeichnet, dass das polymere Egalisiermittel kationische, wiederkehrende Einheiten aufweist, die einer der Formeln

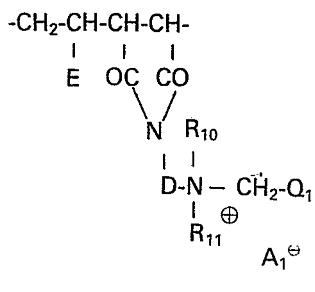

oder

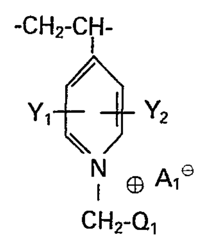

entsprechen, worin $Q_1$ einen Substituenten der Formel

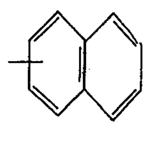 ,

(4b) 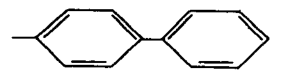 ,

$-CO-NH_2$, (4d) $-C\equiv N$ , (4e) 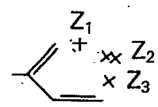 oder

$-(CH_2)_nH$, worin n = 5–19 bedeutet, oder $Q_1$ ein Gemisch mindestens eines Substituenten einer der angegebenen Formeln mit Alkyl oder Alkenyl mit höchstens 4 Kohlenstoffatomen darstellt, und D Äthylen oder n-Propylen, E Wasserstoff, oder Phenyl, $R_{10}$ und $R_{11}$ je Methyl, Äthyl, n-Propyl oder n-Butyl oder zusammen mit dem Stickstoffatom, an welches sie gebunden sind, einen Pyrolidin-, Piperidin- oder Morpholinrest bilden, $A_1$ Halogen, $Y_1$ und $Y_2$ je Wasserstoff, Methyl oder Äthyl, und $Z_1$, $Z_2$ und $Z_3$ je Wasserstoff, Halogen, Methyl oder Äthyl bedeuten.

11. Verfahren gemäss Anspruch 10, dadurch gekennzeichnet, dass das Egalisiermittel kationische wiederkehrende Einheiten einer der Formeln

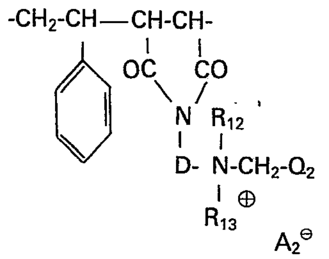

oder

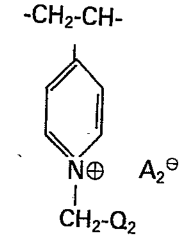

aufweist, worin $Q_2$ -CN, $CO-NH_2$ oder Phenyl, D Äthylen oder n-Propylen, $A_2$ Chlor oder Brom, $R_{12}$ und $R_{13}$ je Methyl, Äthyl oder n-Propyl oder zusammen mit dem Stickstoffatom, an welches sie gebunden sind, einen Morpholinrest bilden, bedeuten.

12. Verfahren gemäss Anspruch 11, dadurch gekennzeichnet, dass das Egalisiermittel kationische wiederkehrende Einheiten einer der Formeln

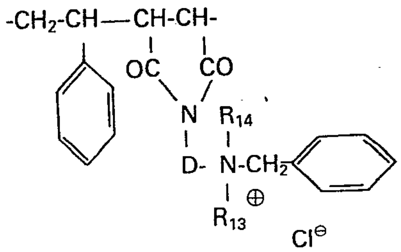

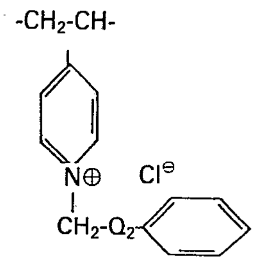

aufweist, worin D Äthylen oder n-Propylen, $R_{14}$ und $R_{15}$ je Methyl oder Äthyl bedeuten.

13. Verfahren gemäss einem der Ansprüche 9 bis 12, dadurch gekennzeichnet, dass das Egalisiermittel ein durchschnittliches Molekulargewicht von 1500 bis 1000000 aufweist.

14. Verfahren gemäss Anspruch 8, dadurch gekennzeichnet, dass das polymere ammoniumgruppenhaltige Egalisiermittel ein quaternäres Ammoniumsalz ist, das kationische wiederkehrende Einheiten der Formel

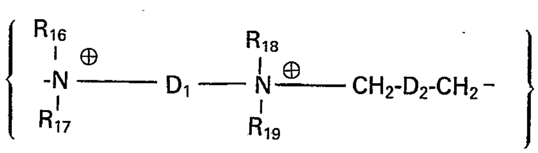

aufweist, worin $R_{16}$, $R_{17}$, $R_{18}$ und $R_{19}$ gleich oder voneinander verschieden sind und gegebenenfalls substituiertes Alkyl, Cycloalkyl oder Alkenyl mit höchstens 20 Kohlenstoffatomen, Aryl oder Aralkyl bedeuten, oder ($R_{16}$ und $R_{17}$) und/oder ($R_{18}$ und $R_{19}$) zusammen mit dem Stickstoffatom, an dem sie gebunden sind, einen gegebenenfalls substituierten heterocyclischen Ring mit 5 oder 6 Ringgliedern bilden; $D_1$ bedeutet $-(CH_2)_m-$, worin m eine Zahl von 1 bis 20 ist, gegebenenfalls unterbrochen durch mindestens eine -S-, $-\overset{O}{\overset{\|}{C}}-$ oder

-CH=CH-Gruppierung oder substituiert mit mindestens einem Hydroxyl, Halogen, Nitril, Alkyl, Hydroxyalkyl, Alkoxy, Carboxyl oder Carbalkoxy oder gegebenenfalls mindestens einem substituierten Aryl- oder Aralkylrest; $D_1$ bedeutet ferner Polyoxyalkylen; oder einen Rest der Formel

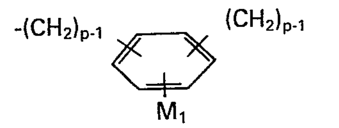

,

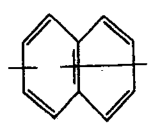

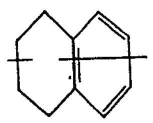

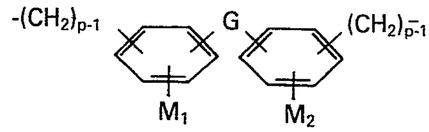

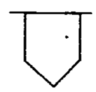

,

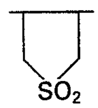

,

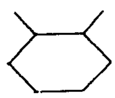

,

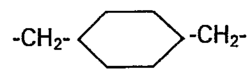

oder

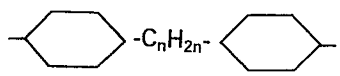

oder zusammen mit den Stickstoffatomen und mindestens je einem der an die Stickstoffatome gebundenen Substituenten einen Rest der Formel

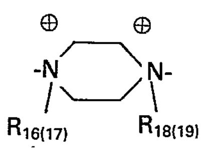

,

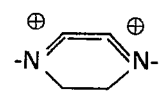

oder

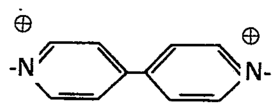

worin

$M_1$ und $M_2$ Wasserstoff, Alkyl, Hydroxy- oder Halogenalkyl mit 1 bis 4 Kohlenstoffatomen, Hydroxyl, Halogen, Carboxyl, Carbalkoxy oder Phenyl sind,

G die direkte Bindung, -O-, $-\underset{\overset{\|}{O}}{C}-$, -S-, $-SO_2-$ oder gegebenenfalls substituiertes Alkylen,

n eine Zahl von 1 bis 6,

p eine Zahl von 1 bis 3, vorzugsweise 1 oder 2 ist, und

$D_2$ bedeutet einen Rest der Formel

oder

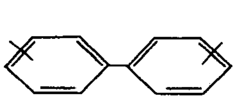

oder

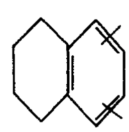

15. Verfahren gemäss Anspruch 14, dadurch gekennzeichnet, dass das polymere Egalisiermittel kationische wiederkehrende Einheiten der Formel

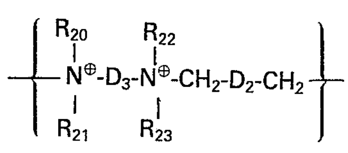

aufweist, worin $R_{20}$, $R_{21}$, $R_{22}$, $R_{23}$ gleich oder voneinander verschieden sind und Cycloalkyl mit 5 bis 6 Kohlenstoffatomen; Alkyl, Hydroxyalkyl, Cyanoalkyl, Alkoxyalkyl, Alkylthioalkyl und Alkylcarbonylalkyl mit 1 bis 10 Kohlenstoffatomen; Arylcarbonylalkyl, Alkylsulfonylalkyl und Arylsulfonylalkyl mit je 1 bis 4 Kohlenstoffatomen im Alkylteil; Carboxyalkyl mit 1 bis 4 Kohlenstoffatomen im Alkylteil; Carbalkoxyalkyl und Di-(carbalkoxy)-alkyl mit je 1 bis 4 Kohlenstoffatomen im Alkoxy- und Alkylteil; Carbonsäureamidalkyl mit 1 bis 10 Kohlenstoffatomen im Alkylteil und gegebenenfalls N-substituiert mit Niederalkyl oder Aryl; oder Phenyl oder Benzyl sind, gegebenenfalls substituiert mit Hydroxyl, Cyano, Halogen und Carboxyl; Alkyl, Hydroxyalkyl, Cyanoalkyl, Alkoxy und Alkylthio mit 1 bis 4 Kohlenstoffatomen; Alkoxyalkyl, Carbalkoxyalkyl und Di-(carbalkoxy)alkyl mit je 1 bis 4 Kohlenstoffatomen im Alkyl- und Alkoxyteil oder ($R_{20}$ und $R_{21}$) und/oder ($R_{22}$ und $R_{23}$) zusammen mit dem Stickstoffatom, an dem sie gebunden sind, einen gegebenenfalls substituierten heterocyclischen Ring mit 5 oder 6 Ringgliedern bilden; $D_3$ bedeutet $-(CH_2)_m-$, worin m eine Zahl von 1 bis 20 ist, gegebenenfalls unterbrochen durch mindestens eine -S-, 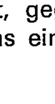 oder -CH=CH-Gruppierung oder substituiert mit mindestens einem Hydroxyl, Chlor, Nitril oder Alkyl, Alkoxy oder Hydroxyalkyl mit 1 bis 4 Kohlenstoffatomen, Carboxyl oder Carbalkoxy mit 1 bis 20, vorzugsweise 1 bis 4 Kohlenstoffatomen im Alkoxyrest oder gegebenenfalls substituierten Phenyl oder Benzylresten; ferner bedeutet $D_3$ für den Fall, dass $R_{20}$ bis $R_{23}$ Methyl ist, einen Rest der Formel

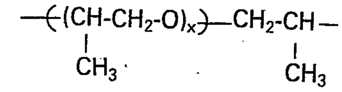

ausserdem steht $D_3$ für die folgenden Brückenglieder

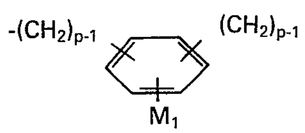 , 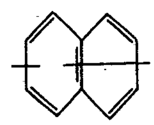 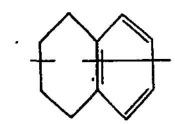 ,

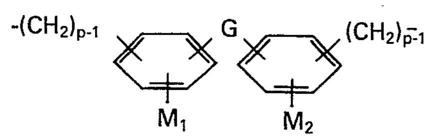 , 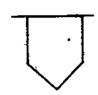 , 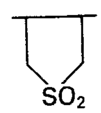 ,

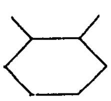 , 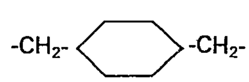 oder 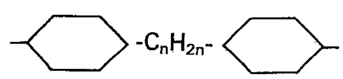

oder zusammen mit den Stickstoffatomen und mindestens ie einem der Substituenten, die an die Stickstoffatome gebunden sind, einen Rest der Formel

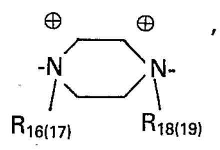 , 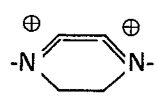 oder 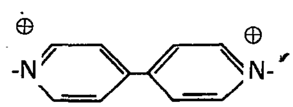

in welchen Formeln x 2,6, 5,6 oder 33,1 ist, und $D_2$, $M_1$ und $M_2$ G, P und n die im Anspruch 14 angegebenen Bedeutungen haben.

16. Verfahren gemäss Anspruch 15, dadurch gekennzeichnet, dass das polymere Egalisiermittel kationische wiederkehrende Einheiten der Formel

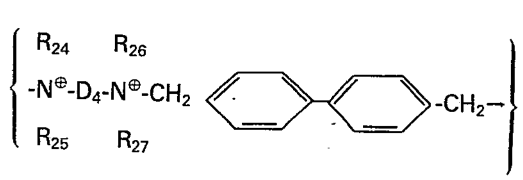

aufweist, worin $R_{24}$, $R_{25}$, $R_{26}$ und $R_{27}$ gleich oder voneinander verschieden sind und Alkyl oder Hydroxyalkyl mit 1 bis 4 Kohlenstoffatomen, Alkenyl mit 2 bis 4 Kohlenstoffatomen, $CH_3OOCCH_2$-, $C_2H_5OOCCH_2$- oder Benzyl bedeuten, oder ($R_{24}$ und $R_{25}$) und/oder ($R_{26}$ und $R_{27}$) zusammen mit dem Stickstoffatom, an dem sie gebunden sind, einen Piperidin- oder Morpholinrest bilden und $D_4$ $-(CH_2)_{m1}-$, worin $m_1$ eine Zahl von 1 bis 12 ist, oder für den Fall, dass $R_{24}$ bis $R_{27}$ Methyl ist, einen Rest der Formel

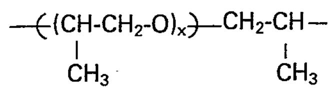

bedeutet, worin x 2,6, 5,6 oder 33,1 ist, oder $D_4$ steht für eines der folgenden Brückenglieder

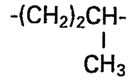 , $-CH_2CH{=}CHCH_2-$,

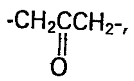 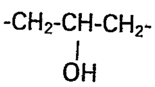 ,

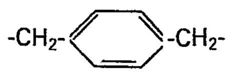 , 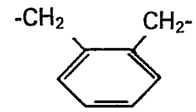 ,

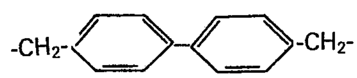 ,

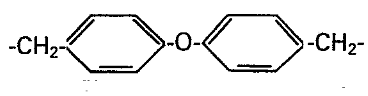 ,

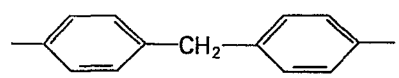

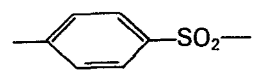 oder

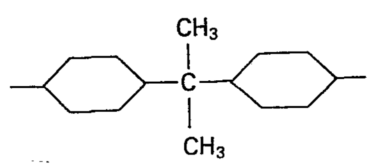

oder zusammen mit den Stickstoffatomen und mindestens je einem der an die Stickstoffatome gebundenen Substituenten ein Rest der Formeln

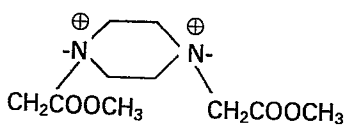 oder 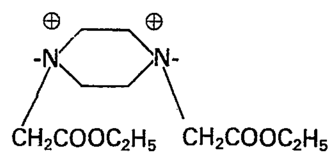

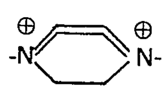 oder 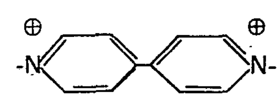

ist.

17. Verfahren gemäss Anspruch 16, dadurch gekennzeichnet, dass das polymere Egalisiermittel kationische wiederkehrende Einheiten der Formel

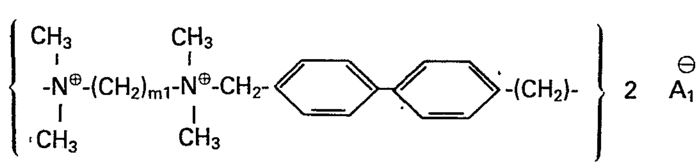

aufweist, worin $m_1$ 1 bis 12 und $A_1$ Halogen ist.

18. Verfahren gemäss Anspruch 16, dadurch gekennzeichnet, dass das Egalisiermittel kationische wiederkehrende Einheiten der Formel

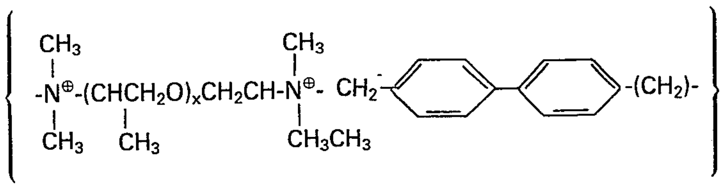

2 Cl$^{\ominus}$

aufweist, worin x 2,6, 5,6 oder 33,1 ist.

19. Verfahren gemäss Anspruch 8, dadurch gekennzeichnet, dass das polymere ammoniumgruppenhaltige Egalisiermittel ein quaternäres Ammoniumsalz ist, das kationische wiederkehrende Einheiten der Formel

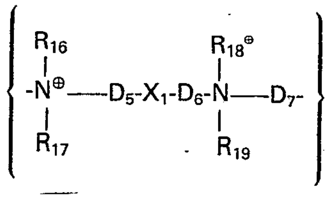

aufweist, worin $R_{16}$, $R_{17}$, $R_{18}$ und $R_{19}$ die im Anspruch 14 angegebenen Bedeutungen haben, $D_5$ und $D_6$ $-C_nH_{2n}-$, worin n 1 bis 12 und die Summe von n in $D_5$ und $D_6$ mindestens 3 beträgt und für n gleich 1 die Bindung zum Brückenglied $X_1$ nicht über ein Stickstoff- oder Sauerstoffatom erfolgt, oder ein aromatisches Brückenglied sind, und $D_5$ und $D_6$ gleich oder voneinander verschieden sind, $D_7$ ein Rest der Formeln $-C_{m2}H_{2m2}$, $-CH_2(O-G_2)_{p1}OCH_2-$, $-CH_2COCH_2-$, $-CH_2CHOHCH_2-$, $-CH_2O-G_1-OCH_2$,

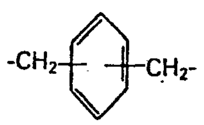

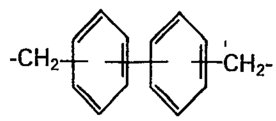

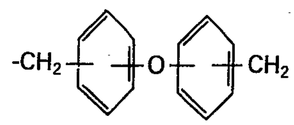

oder

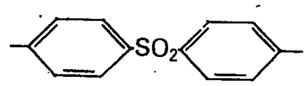

ist, worin $G_1$ geradkettiges oder verzweigtes, gegebenenfalls mit Halogen substituiertes Alkylen mit 2 bis 12 Kohlenstoffatomen, $G_2$ Äthylen, Isopropylen oder n-Butylen, $m_2$ 2 bis 12 und $p_1$ 2 bis 15 sind,und $X_1$ ein zweiwertiges Brückenglied der Formeln

$-NHCONH-$ , $-NHCOX_2CONH-$ , $-CONH-$ , $-OCONH-$ ,

$-COO-$ , $-COX_3CO-$ ,

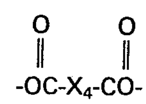

oder

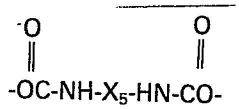

ist, worin $X_2$ die direkte Bindung, Alkylen, Alkenylen, Arylen bzw. Heteroarylen, Diaminoalkylen, Diaminoarylen, gegebenenfalls halogensubstituiertes Dioxyalkylen, Polyoxyalkylenoxy oder Dioxyarylen, $X_3$ Diaminoalkylen, gegebenenfalls halogensubstituiertes Dioxyalkylen, Polyoxyalkylenoxy oder gegebenenfalls halogensubstituiertes Dithioalkylen ist, $X_4$ Arylen und $X_5$ Alkylen oder Arylen ist.

20. Verfahren gemäss Anspruch 19, dadurch gekennzeichnet, dass das polymere Egalisiermittel kationische wiederkehrende Einheiten der Formel

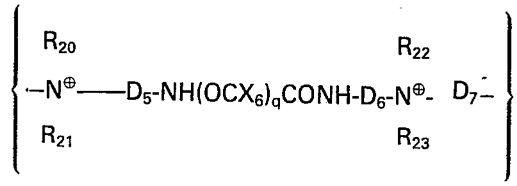

aufweist, worin $R_{20}$, $R_{21}$, $R_{22}$ und $R_{23}$ die im Anspruch 15 angegebenen Bedeutungen haben, $X_6$ $-C_rH_{2r}-$, worin r eine ganze Zahl von 1 bis 12 ist, $-(CH=CH-)_s$, worin s 1 oder 2 ist, ein Rest der Formeln $-NH(CH_2)_mNH-$, worin m 2 bis 12 ist,

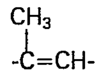 , 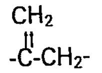 , 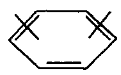 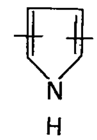 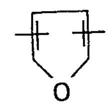

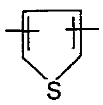 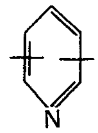 , 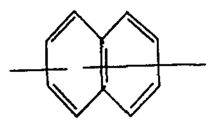 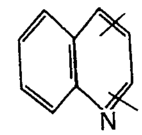 ,

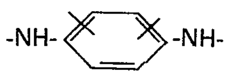 oder 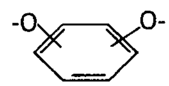

worin die aromatischen Ringe mit Halogen, Alkyl und/oder Alkoxy substituiert sein können, ferner der Formel

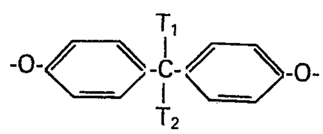

worin $T_1$ und $T_2$ je Wasserstoff oder Methyl sind, und der Formel $-OG_1O-$ oder $-(OG_2)_{p1}O-$ ist, worin $G_1$, $G_2$, $p_1$ und $D_5$, $D_6$ und $D_7$ die im Anspruch 19 angegebenen Bedeutungen haben und q 0 oder 1 ist.

21. Verfahren gemäss Anspruch 19, dadurch gekennzeichnet, dass das polymere Egalisiermittel kationische wiederkehrende Einheiten der Formel

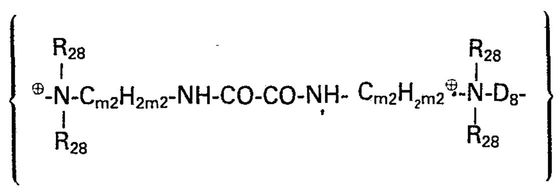

aufweist, worin $R_{28}$ Alkyl mit 1 bis 4 Kohlenstoffatomen, $D_8$ $-C_{m3}H_{2m3}-$,

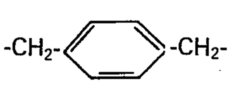 , 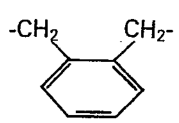 oder 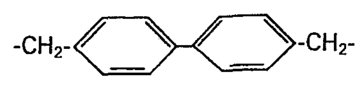 ,

$m_2$ 2 bis 12 und $m_3$ 2 bis 6 ist.

22. Verfahren gemäss Anspruch 19, dadurch gekennzeichnet, dass das polymere Egalisiermittel kationische wiederkehrende Einheiten der Formel

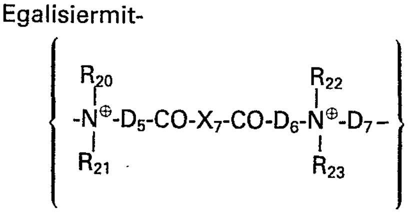

aufweist, worin $X_7$ $-OG_1O-$, $-(G_2)_{p1}-O-$, $-S(CH_2)_{m2}S-$ oder $-HN(CH_2)_{m2}NH-$ ist, und $G_1$, $G_2$, $m_2$, $p_1$, $D_5$, $D_6$, $D_7$, $R_{20}$, $R_{21}$, $R_{22}$ und $R_{23}$ die in den Ansprüchen 15 und 19 angegebenen Bedeutungen haben.

23. Verfahren gemäss Anspruch 19, dadurch gekennzeichnet, dass das polymere Egalisiermittel kationische wiederkehrende Einheiten der Formel

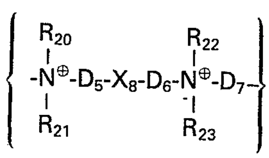

aufweist, worin $X_8$ -CONH-, -OCONH- oder -COO- ist und $D_5$, $D_6$, $D_7$ und $R_{20}$, $R_{21}$, $R_{22}$ und $R_{23}$ die in den Ansprüchen 15 und 19 angegebenen Bedeutungen haben.

24. Verfahren gemäss Anspruch 23, dadurch gekennzeichnet, dass das polymere Egalisiermittel kationische wiederkehrende Einheiten der Formel

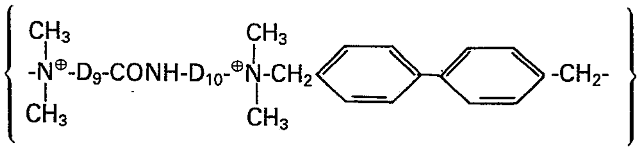

aufweist, worin $D_9$ Alkylen mit 1 bis 4 Kohlenstoffatomen oder Phenylen und $D_{10}$ Alkylen mit 2 bis 6 Kohlenstoffatomen oder Phenylen ist.

25. Verfahren gemäss Anspruch 19, dadurch gekennzeichnet, dass das polymere Egalisiermittel kationische wiederkehrende Einheiten der Formel

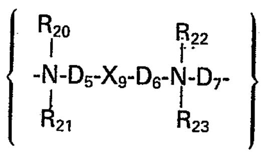

aufweist, worin $X_9$ ein Rest der Formeln

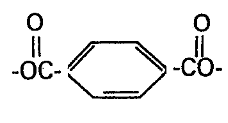 ,

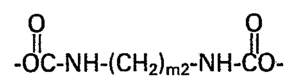 oder

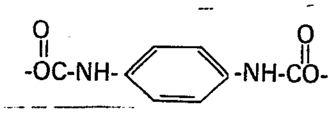

und $m_2$, $D_5$, $D_6$, $D_7$, $R_{20}$, $R_{21}$, $R_{22}$ und $R_{23}$ die in den Ansprüchen 15 und 19 angegebenen Bedeutungen haben.

26. Verfahren gemäss Anspruch 19, dadurch gekennzeichnet, dass das polymere Egalisiermittel kationische wiederkehrende Einheiten der Formel

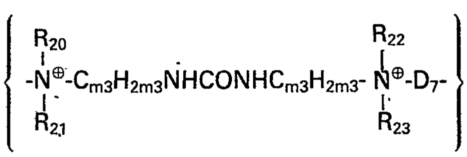

aufweist, worin $m_3$ 2 bis 6 ist und $D_7$, $R_{20}$, $R_{21}$, $R_{22}$ und $R_{23}$ die in den Ansprüchen 15 und 19 angegebenen Bedeutungen haben.

27. Verfahren gemäss Anspruch 26, dadurch gekennzeichnet, dass das polymere Egalisiermittel kationische wiederkehrende Einheiten der Formel

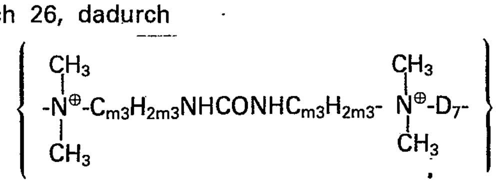

aufweist, worin $D_7$ und $m_3$ die in den Ansprüchen 19 und 26 angegebenen Bedeutungen haben.

28. Verfahren gemäss einem der Ansprüche 14 bis 27, dadurch gekennzeichnet, dass das polymere Egalisiermittel ein durchschnittliches Molekulargewicht von 1000 bis 100000 aufweist.

29. Verfahren gemäss einem der Ansprüche 1 bis 28, dadurch gekennzeichnet, dass das kationische oder basische polymere Egalisiermittel in Mengen von 0,01–5 Gew.-%, bezogen auf das Cellulosematerial, verwendet wird.

30. Verfahren gemäss Anspruch 29, dadurch gekennzeichnet, dass das kationische oder basische polymere Egalisiermittel in Mengen von 0,1–0,5 Gew.-%, bezogen auf das Cellulosematerial, verwendet wird.

31. Verfahren gemäss einem der Ansprüche 1 bis 30, dadurch gekennzeichnet, dass die wässrige Färbeflotte mindestens 2 kationische oder basische Farbstoffe enthält.

32. Verfahren gemäss einem der Ansprüche 1 bis 30, dadurch gekennzeichnet, dass die wässrige

Färbeflotte mindestens 3 kationische oder basische Farbstoffe enthält.

33. Verfahren gemäss einem der Ansprüche 1 bis 32, dadurch gekennzeichnet, dass das cellulosehaltige Fasermaterial mit einer wässrigen Flotte, enthaltend mindestens ein kationisches oder basisches polymeres Egalisiermittel, vorbehandelt wird.

34. Verfahren gemäss Anspruch 33, dadurch gekennzeichnet, dass man das cellulosehaltige Fasermaterial bei einer Temperatur von 10 bis 130°C vorbehandelt.

35. Verfahren gemäss Anspruch 34, dadurch gekennzeichnet, dass man das cellulosehaltige Fasermaterial bei einer Temperatur von 20 bis 50°C vorbehandelt.

36. Verfahren gemäss einem der Ansprüche 1 bis 35, dadurch gekennzeichnet, dass der pH-Wert der Vorbehandlungs- und/oder Färbeflotte zwischen 3 und 11 liegt.

37. Verfahren gemäss Anspruch 36, dadurch gekennzeichnet, dass der pH-Wert der Vorbehandlungs- und/oder Färbeflotte zwischen 4 und 7 liegt.

38. Verfahren gemäss einem der Ansprüche 1 bis 37, dadurch gekennzeichnet, dass man das Cellulosematerial im Ausziehverfahren behandelt.

39. Verfahren gemäss einem der Ansprüche 1 bis 35, dadurch gekennzeichnet, dass man textiles Cellulosematerial oder Papier behandelt.

40. Verfahren gemäss Anspruch 39, dadurch gekennzeichnet, dass man Baumwolle, Viscose, Leinen oder Rayon behandelt.

41. Färbeflotte zur Durchführung des Verfahrens gemäss einem der Ansprüche 1 bis 40, dadurch gekennzeichnet, dass sie mindestens einen kationischen oder basischen Farbstoff, der über mindestens ein System an delokalisierten π-Elektronen verfügt, das aus mindestens 9 konjugierten, in einer Ebene liegenden Doppelbindungen besteht, und eine planare Molekülstruktur besitzt sowie mindestens aus einem kationischen oder basischen polymeren Egalisiermittel, welches mindestens eine Amino-, Ammonium-, Sulfonium- oder Phosphoniumgruppe enthält, wobei die Aminogruppe unter Anwendungsbedingungen in protonierter Form vorliegt, besteht.

42. Das nach dem Verfahren gemäss einem der Ansprüche 1 bis 40 gefärbte cellulosehaltige Fasermaterial.

**Claims**

1. A process for dyeing cellulose-containing fibre materials with an aqueous dye liquor which dye liquor contains at least one cationic or basis dye which

a) has available at least one system of delocalised π-electrons, which system consists of at least 9 conjugated double bonds lying in one plane and

b) possesses a planar molecular structure, the said materials being treated, before or during dyeing, with at least one cationic or basic polymeric levelling agent which contains at least one amino, ammonium, sulfonium or phosphonium group, the amino group under application conditions being in the protonised form.

2. A process according to claim 1, wherein the cationic or basic dye used is one containing at least 12 uninterruptedly conjugated double bonds lying in one plane.

3. A process according to claim 1 or 2, wherein the cationic or basic dye contains 1 to 8 cationic or basic groups.

4. A process according to claim 3, wherein the cationic or basic dye contains 1 to 3 cationic or basic groups.

5. A process according to claim 1, wherein the employed dye is a dye of the formula

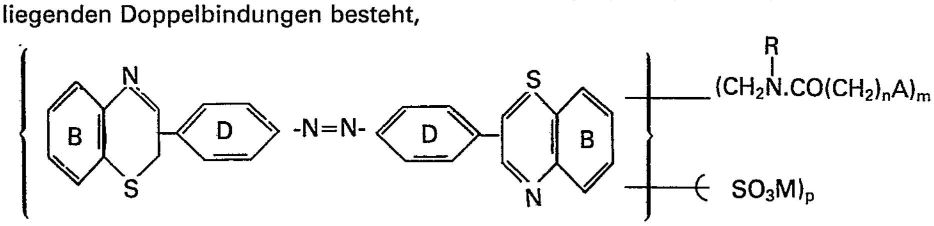

wherein R is hydrogen or an alkyl group having 1 to 4 C atoms; A is an optionally quaternised basic radical; n denotes the numbers 1 to 4 inclusive; m denotes the numbers from 1 to 4 inclusive; M is hydrogen or any chosen cation; and p denotes the numbers 0 to 2 inclusive, with the proviso that m is equally great as or greater than p, and wherein the benzene groups B and D can be identically or differently further mono- or polysubstituted.

6. A process according to claim 1, wherein the employed dye is a dye of the formula

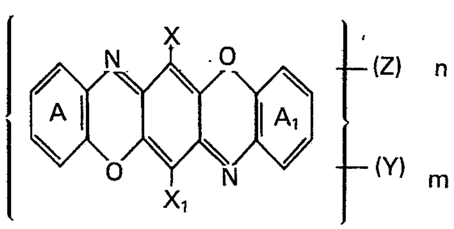

wherein Z is an optionally quaternised basic group; Y is an anionic group; X and $X_1$ independently of one another are identical or different substituents from the class: hydrogen, halogen, CN, substituted or unsubstituted alkyl ($C_1$–$C_4$), substituted or unsubstituted phenyl, or $NHCOR_1$, wherein $R_1$ is alkyl ($C_1$–$C_4$), cycloalkyl, substituted or unsubstituted aryl, or a heterocyclic radical, or

$OCOR_2$, wherein $R_2$ is substituted or unsubstituted alkyl ($C_1$–$C_4$) or cycloalkyl, or

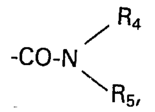

wherein $R_4$ and $R_5$ independently of one another are: hydrogen, substituted or unsubstituted alkyl ($C_1$–$C_4$), cycloalkyl or aryl, or $R_4$ together with $R_5$ and including the N atom forms a heterocyclic ring, or X and $X_1$ are the group $COOR_6$, wherein $R_6$ is hydrogen, substituted or unsubstituted alkyl or cycloalkyl; n denotes the numbers from 1 to 4 inclusive; m denotes the numbers 0 to 2 inclusive, with the proviso that the number m is smaller than n; and wherein the benzene groups A and $A_1$ can be identically or differently further mono- or polysubstituted.

7. A process according to claim 1, wherein the employed dye is a dye of the formula

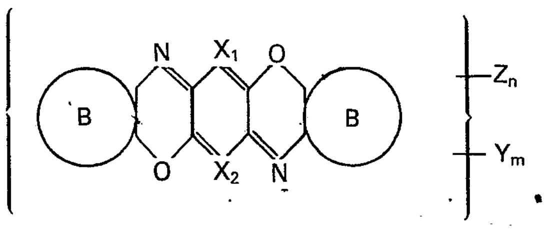

wherein $X_1$ and $X_2$ independently of one another are each a straight-chain or branched-chain alkyl group having 1 to 4 carbon atoms, a substituted or unsubstituted phenyl group, halogen, hydrogen, cyano, a phenylamino group which can be substituted in the phenyl group, or they are each the $CONH_2$ group, the CONH phenyl group which can be substituted in the phenyl group, or they are each a COO-alkyl($C_1$–$C_4$) group; Z is an optionally quaternised basic group; Y is an anionic group; the B's independently of one another are each a fused-on ring system having 2 to 4 carbocyclic and/or heterocyclic rings, which system can be further substituted, in addition to the substituents Z and Y; n denotes the numbers from 1 to 4 inclusive, and m the numbers from 0 to 2 inclusive, with the proviso that m is not greater than n.

8. A process according to any one of claims 1 to 7 inclusive, wherein the polymeric levelling agent contains ammonium groups.

9. A process according to claim 8, wherein the polymeric levelling agent containing ammonium groups contains a copolymer from maleic anhydride and ethylene or styrene, which is reacted with an n-alkylamine having 2 or 3 carbon atoms, which is substituted in the terminal position on the alkyl group by alkylamino having 1 to 4 carbon atoms, or by a cyclic amine which contains 4 or 5 ring carbon atoms and optionally 1 oxygen atom; or it contains a homopolymer of a vinylpyridine which is unsubstituted or substituted by methyl or ethyl; the homo- or copolymer being quaternised with a halomethylnaphthalene or -diphenyl, with chloroacetamide or chloroacetonitrile, or with a benzyl halide which is unsubstituted or substituted by halogen, methyl or ethyl, or with an alkyl or alkenyl halide having at most 4 carbon atoms.

10. A process according to claim 9, wherein the polymeric levelling agent contains cationic recurring units which correspond to one of the formulae

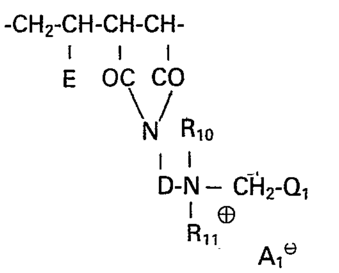

or

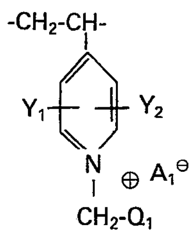

wherein $Q_1$ is a substituent of the formula

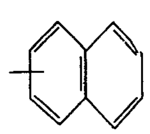

,

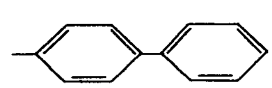

,

-CO-NH$_2$, (4d) -C≡N , (4e) 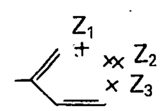 or

$-(CH_2)_nH$, wherein n is 5–19 inclusive, or $Q_1$ is a mixture of at least one substituent of any one of the given formulae with alkyl or alkenyl having at most 4 carbon atoms; and D is ethylene or n-propylene; E is hydrogen or phenyl; $R_{10}$ and $R_{11}$ are each methyl, ethyl, n-propyl or n-butyl, or together with the nitrogen atom to which they are bound they form a pyrrolidine, piperidine or morpholine group; $A_1$ is halogen, $Y_1$ and $Y_2$ are each hydrogen, methyl or ethyl; and $Z_1$, $Z_2$ and $Z_3$ are each hydrogen, halogen, methyl or ethyl.

11. A process according to claim 10, wherein the levelling agent contains cationic recurring units of the formula

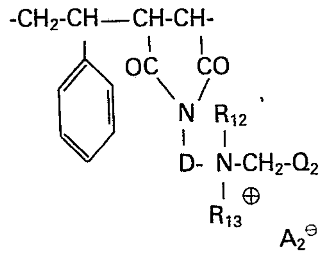

or

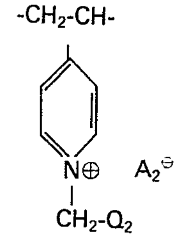

wherein $Q_2$ is -CN, $-CO-NH_2$ or phenyl; D is ethylene or n-propylene; $A_2$ is chlorine or bromine; $R_{12}$ and $R_{13}$ are each methyl, ethyl or n-propyl, or together with the nitrogen atom to which they are bound they form a morpholine group.

12. A process according to claim 11, wherein the levelling agent contains cationic recurring units of the formula

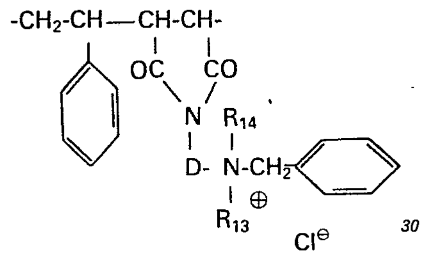

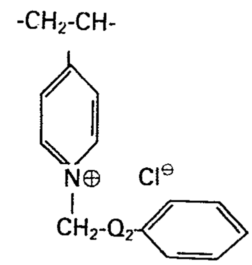

wherein D is ethylene or n-propylene; and $R_{14}$ and $R_{15}$ are each methyl or ethyl.

13. A process according to any one of claims 9 to 12, inclusive, wherein the levelling agent has a mean molecular weight of 1,500 to 1,000,000.

14. A process according to claim 8, wherein the polymeric levelling agent containing ammonium groups is a quaternary ammonium salt which contains cationic recurring units of the formula

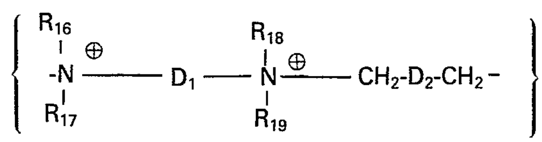

wherein $R_{16}$, $R_{17}$, $R_{18}$ and $R_{19}$ are identical to or different from one another, and are each substituted or unsubstituted alkyl, cycloalkyl or alkenyl having at most 20 carbon atoms, aryl or aralkyl; or ($R_{16}$ and $R_{17}$) and/or ($R_{18}$ and $R_{19}$) together with the nitrogen atom to which they are bound form a substituted or unsubstituted heterocyclic ring having 5 or 6 ring members; $D_1$ is $-(CH_2)_m-$, wherein m is a number from 1 to 20 inclusive, which groups can be interrupted by at least one -S-, $-\overset{O}{\overset{\|}{C}}-$ or -CH=CH- grouping, or substituted by at least one hydroxyl, halogen, nitrile, alkyl, hydroxyalkyl, alkoxy, carboxyl or carbalkoxy group, or can be substituted by at least one substituted aryl or aralkyl group; or $D_1$ is polyoxyalkylene; or a radical of any one of the formulae

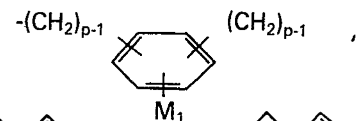

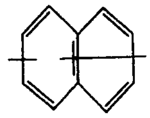

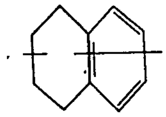

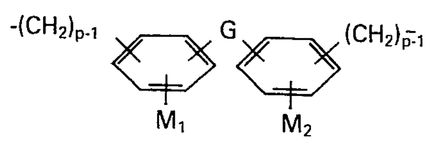

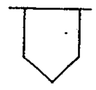 , 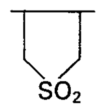 ,

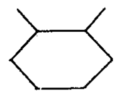 , 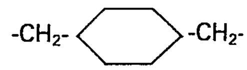 or

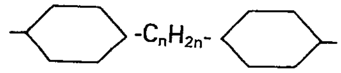

or together with the nitrogen atom and at least one of the substituents bound to the nitrogen atoms it forms a radical of the formula

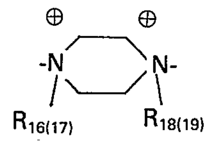 , 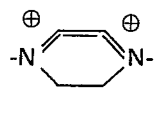 or

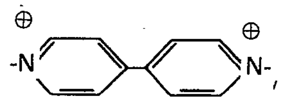 ,

in which formulae $M_1$ and $M_2$ are each hydrogen, alkyl, hydroxy- or haloalkyl having 1 to 4 carbon atoms, hydroxyl, halogen, carboxyl, carbalkoxy or phenyl; G is the direct bond, -O-, $-\underset{\underset{O}{\|}}{C}-$, -S-, $-SO_2-$ or substituted or unsubstituted alkylene; n is a number from 1 to 6 inclusive; p is a number from 1 to 3 inclusive, preferably 1 or 2; and $D_2$ is a radical of the formula

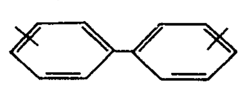 or 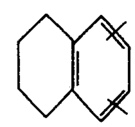

15. A process according to claim 14, wherein the polymeric levelling agent contains cationic recurring units of the formula

$$\left[ -\underset{R_{21}}{\overset{R_{20}}{N^{\oplus}}}-D_3-\underset{R_{23}}{\overset{R_{22}}{N^{\oplus}}}-CH_2-D_2-CH_2- \right]$$

wherein $R_{20}$, $R_{21}$, $R_{22}$ and $R_{23}$ are identical to or different from one another, and are cycloalkyl having 5 or 6 carbon atoms; alkyl, hydroxyalkyl, cyanoalkyl, alkoxyalkyl, alkylthioalkyl and alkylcarbonylalkyl having 1 to 10 carbon atoms; arylcarbonylalkyl, alkylsulfonylalkyl and arylsulfonylalkyl having 1 to 4 carbon atoms in each alkyl part; carboxyalkyl having 1 to 4 carbon atoms in the alkyl part; carbalkoxyalkyl and di-(carbalkoxy)-alkyl having 1 to 4 carbon atoms in each alkoxy and alkyl part; carboxylic acid amidoalkyl which has 1 to 10 carbon atoms in the alkyl part and which can be N-substituted with lower alkyl or aryl; or they are phenyl or benzyl which can be substituted by hydroxyl, cyano, halogen and carboxyl, or by alkyl, hydroxyalkyl, cyanoalkyl, alkoxy and alkylthio having 1 to 4 carbon atoms; alkoxyalkyl, carbalkoxyalkyl and di-(carbalkoxy)alklyl having in each alkyl and alkoxy part 1 to 4 carbon atoms; or ($R_{20}$ and $R_{21}$) and/or ($R_{22}$ and $R_{23}$) together with the nitrogen atom to which they are bound form a substituted or unsubstituted heterocyclic ring having 5 or 6 ring members; $D_3$ is $-(CH_2)_m-$, wherein m is a number from 1 to 20 inclusive, which groups can be interrupted by at least one -S-, $-\underset{\underset{O}{\|}}{C}-$ or -CH=CH- grouping, or can be substituted by at least one hydroxyl, chlorine, nitrile or alkyl, alkoxy or hydroxyalkyl having 1 to 4 carbon atoms, carboxyl or carbalkoxy having 1 to 20, preferably 1 to 4, carbon atoms in the alkoxy part, or substituted or unsubstituted phenyl or benzyl groups; or $D_3$ in the case where $R_{20}$ to $R_{23}$ are methyl is a radical of the formula

$$-\!\!\left(\underset{CH_3}{\underset{|}{CH}}-CH_2-O\right)_x\!\!-CH_2-\underset{CH_3}{\underset{|}{CH}}-$$

$D_3$ is furthermore one of the following bridge members:

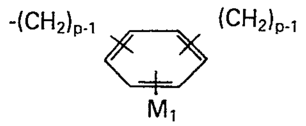 ,

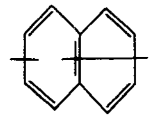

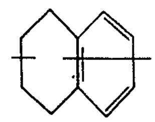 ,

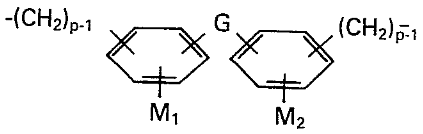 ,

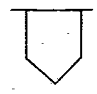 ,

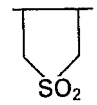 ,

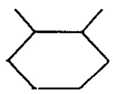 ,

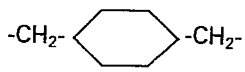 or

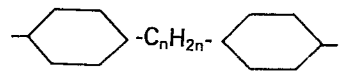

or together with the nitrogen atoms and in each case at least one of the substituents bound to the nitrogen atoms $D_3$ is a radical of the formula

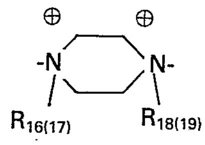 ,

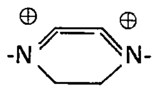 or

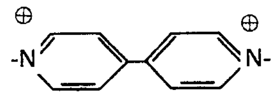

in which formulae x is 2,6, 5,6 or 33,1 and $D_2$, $M_1$ and $M_2$, G, p and n have the meanings given in claim 14.

16. A process according to claim 15, wherein the polymeric levelling agent contains cationic recurring units of the formula

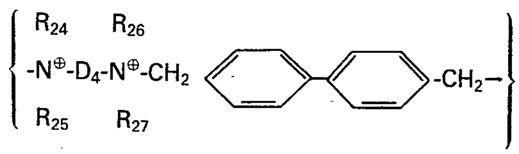

wherein $R_{24}$, $R_{25}$, $R_{26}$ and $R_{27}$ are identical to or different from one another, and are alkyl or hydroxyalkyl having 1 to 4 carbon atoms, alkenyl having 2 to 4 carbon atoms, $CH_3OOCCH_2$- $C_2H_5OOCCH_2$- or benzyl; or ($R_{24}$ and $R_{25}$) and/or ($R_{26}$ and $R_{27}$) together with the nitrogen atom to which they are bound form a piperidine or morpholine group; and $D_4$ is $-(CH_2)_{m1}$, wherein $m_1$ is a number from 1 to 12 inclusive, or in the case where $R_{24}$ to $R_{27}$ are methyl $D_4$ is a radical of the formula

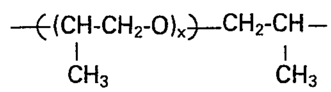

wherein x is 2,6, 5,6 or 33,1, or $D_4$ is one of the following bridge members:

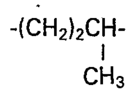 ,

$-CH_2CH{=}CHCH_2-$,

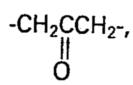

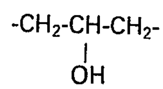 ,

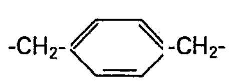 ,

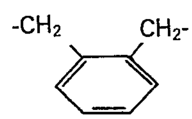 ,

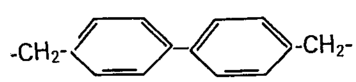 ,

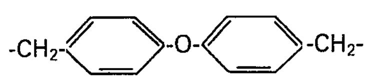 ,

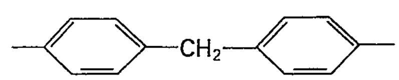

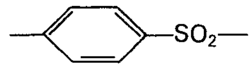

or

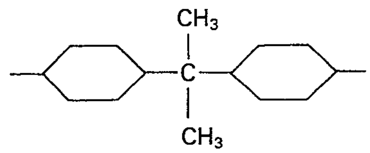

or together with the nitrogen atoms and in each case at least one of the substituents bound to the nitrogen atoms $D_4$ is a radical of the formula

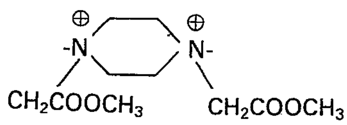

or

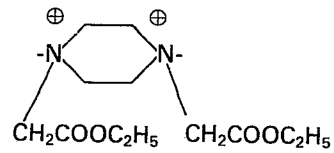

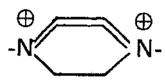

or

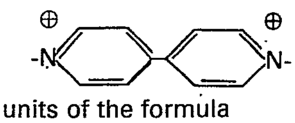

17. A process according to claim 16, wherein the polymeric levelling agent contains cationic recurring units of the formula

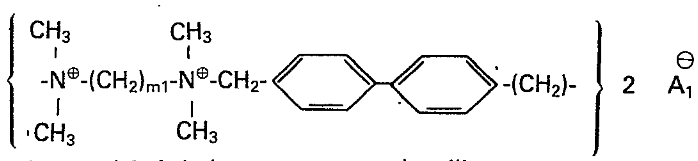

wherein $m_1$ is 1 to 12 inclusive; and $A_1$ is halogen.

18. A process according to claim 16, wherein the levelling agent contains cationic recurring units of the formula

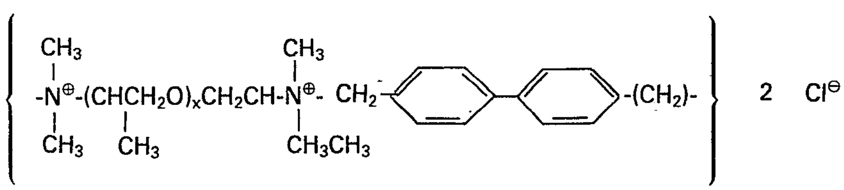

wherein x is 2,6, 5,6 or 33,1.

19. A process according to claim 8, wherein the polymeric levelling agent containing ammonium groups is a quaternary ammonium salt containing cationic recurring units of the formula

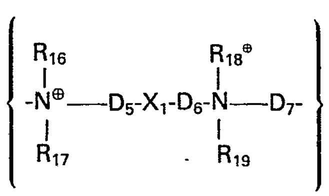

wherein $R_{16}$, $R_{17}$, $R_{18}$ and $R_{19}$ have the meanings given in claim 14; $D_5$ and $D_6$ are each $-C_nH_{2n}-$, wherein n is 1 to 12 inclusive; and the sum of the n's in $D_5$ and $D_6$ is at least 3, and for n equals 1 the bond to the bridge member $X_1$ does not occur by way of a nitrogen or oxygen atom; or $D_5$ and $D_6$ are an aromatic bridge member, and they are identical to or different from one another; $D_7$ is a radical of the formula $-C_{m2}H_{2m2}$-, $CH_2(OG_2)_{p1}OCH_2$-, $-CH_2COCH_2$-, $-CH_2CHOHCH_2$-, $-CH_2O-G_1-OCH_2$,

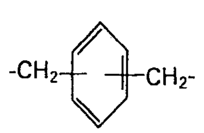

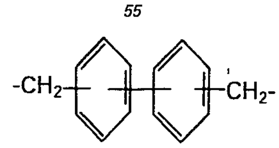

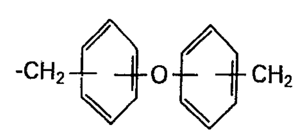

or

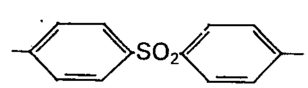

wherein $G_1$ is straight-chain or branched-chain alkylene which has 2 to 12 carbon atoms and which can be substituted by halogen; $G_2$ is ethylene, isopropylene or n-butylene; $m_2$ is 2 to 12 inclusive; and $p_1$ is 2 to 15 inclusive; and $X_1$ is a bivalent bridge member of the formula

-NHCONH- , -NHCOX$_2$CONH- , -CONH- , -OCONH- ,

-COO- , -COX$_3$CO- , 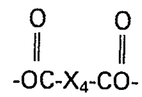 or

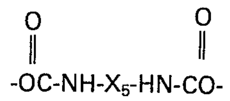

wherein $X_2$ is the direct bond, alkylene, alkenylene, arylene or heteroarylene, diaminoalkylene, diaminoarylene, optionally halogen-substituted dioxyalkylene, polyoxyalkyleneoxy or dioxyarylene; $X_3$ is a diaminoalkylene, optionally halogen-substituted dioxyalkylene, polyoxyalkyleneoxy or optionally halogen-substituted dithioalkylene; $X_4$ is arylene; and $X_5$ is alkylene or arylene.

20. A process according to claim 19, wherein the polymeric levelling agent contains cationic recurring units of the formula

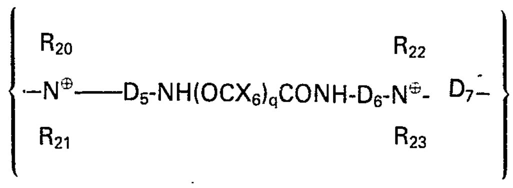

wherein $R_{20}$, $R_{21}$, $R_{22}$ and $R_{23}$ have the meanings given in claim 15; $X_6$ is $-C_rH_{2r}-$, wherein r is an integer from 1 to 12 inclusive, $-(CH{=}CH-)_s$, wherein s is 1 or 2, a radical of the formula $-NH(CH_2)_mNH-$, wherein m is 2 to 12 inclusive,

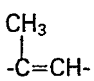 , 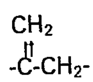 , 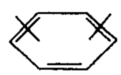 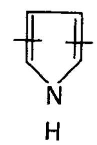 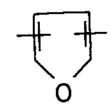

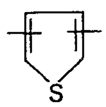 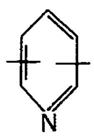 , 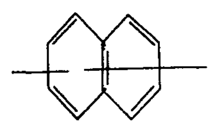 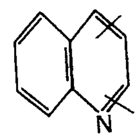 ,

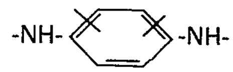 or 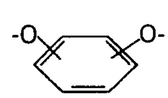

wherein the aromatic rings can be substituted by halogen, alkyl and/or alkoxy; also of the formula

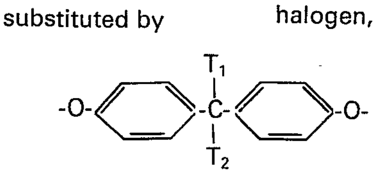

wherein $T_1$ and $T_2$ are each hydrogen or methyl; and of the formula $-OG_1O-$, or $-(OG_2)_{p1}O-$, wherein $G_1$, $G_2$, $p_1$ and $D_5$, $D_6$ and $D_7$ have the meanings given in claim 19; and q is 0 or 1.

21. A process according to claim 19, wherein the polymeric levelling agent contains cationic recurring units of the formula

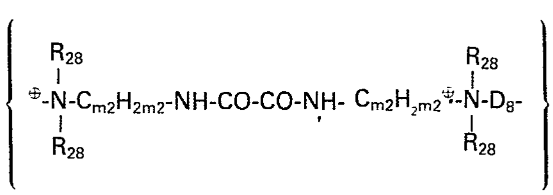

wherein $R_{28}$ is alkyl having 1 to 4 carbon atoms; $D_8$ is $-C_{m3}H_{2m3}-$,

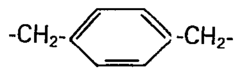 , 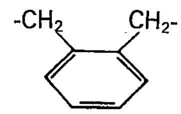 or 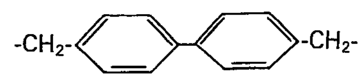 ,

$m_2$ is 2 to 12 inclusive; and $m_3$ is 2 to 6 inclusive.

22. A process according to claim 19 wherein the polymeric levelling agent contains cationic recurring units of the formula

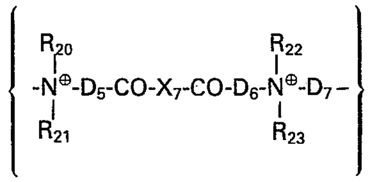

wherein $X_7$ is $-OG_1O-$, $-(OG_2)_{p1}O-$, $-S(CH_2)_{m2}S-$ or $-NH(CH_2)_{m2}NH-$; and $G_1$, $G_2$, $m_2$, $p_1$, $D_5$, $D_6$, $D_7$, $R_{20}$, $R_{21}$, $R_{22}$ and $R_{23}$ have the meanings given in claims 15 and 19.

23. A process according to claim 19, wherein the polymeric levelling agent contains cationic recurring units of the formula

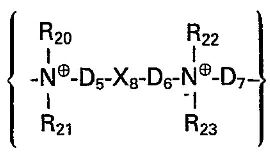

wherein $X_8$ is -CONH-, -OCONH- or -COO-, and $D_5$, $D_6$, $D_7$ and $R_{20}$, $R_{21}$, $R_{22}$ and $R_{23}$ have the meanings given in claims 15 and 19.

24. A process according to claim 23, wherein the polymeric levelling agent contains cationic recurring units of the formula

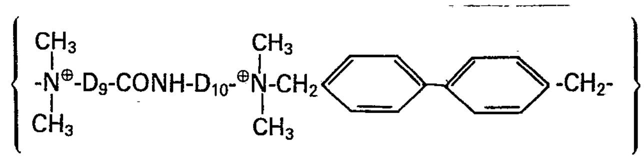

wherein $D_9$ is alkylene having 1 to 4 carbon atoms, or phenylene; and $D_{10}$ is alkylene having 2 to 6 carbon atoms, or phenylene.

25. A process according to claim 19, wherein the polymeric levelling agent contains cationic recurring units of the formula

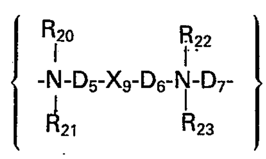

wherein $X_9$ is a radical of the formula

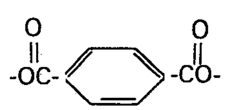 , 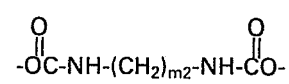 or

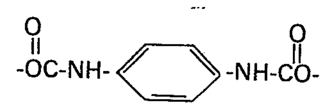

and $m_2$, $D_5$, $D_6$, $D_7$, $R_{20}$, $R_{21}$, $R_{22}$ and $R_{23}$ have the meanings given in claims 15 and 19.

26. A process according to claim 19, wherein the polymeric levelling agent contains cationic recurring units of the formula.

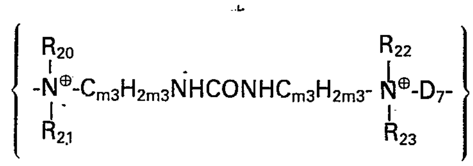

wherein $m_3$ is 2 to 6 inclusive; and $D_7$, $R_{20}$, $R_{21}$, $R_{22}$ and $R_{23}$ have the meanings given in claims 15 and 19.

27. A process according to claim 26 wherein the polymeric levelling agent contains cationic recurring units of the formula

$$\left\{ -\overset{CH_3}{\underset{CH_3}{N^{\oplus}}}-C_{m_3}H_{2m_3}NHCONHC_{m_3}H_{2m_3}-\overset{CH_3}{\underset{CH_3}{N^{\oplus}}}-D_7- \right\}$$

wherein $D_7$ and $m_3$ have the meanings given in claims 19 and 26.

28. A process according to any one of claims 14 to 27 inclusive, wherein the levelling agent has a mean molecular weight of 1,000 to 100,000.

29. A process according to any one of claims 1 to 28 inclusive, wherein the cationic or basic polymeric levelling agent is used in amounts of 0,01–5 per cent by weight, relative to the cellulose material.

30. A process according to claim 29, wherein the cationic or basic levelling agent is used in amounts of 0,1–0,5 per cent by weight, relative to the cellulose material.

31. A process according to any one of claims 1 to 30 inclusive, wherein the aqueous dye liquor contains at least 2 cationic or basic dyes.

32. A process according to any one of claims 1 to 30 inclusive, wherein the aqueous dye liquor contains at least 3 cationic or basic dyes.

33. A process according to any one of claims 1 to 32 inclusive, wherein the cellulose-containing fibre material is pretreated with an aqueous liquor containing at least one cationic or basic polymeric levelling agent.

34. A process according to claim 33, wherein the cellulose-containing fibre material is pretreated at a temperature of 10 to 130°C.

35. A process according to claim 34, wherein the cellulose-containing fibre material is pretreated at a temperature of 20 to 50°C.

36. A process according to any one of claims 1 to 35 inclusive, wherein the pH value of the pretreatment liquor and/or dye liquor is between 3 and 11 inclusive.

37. A process according to claim 36, wherein the pH value of the pretreatment liquor and/or dye liquor is between 4 and 7 inclusive.

38. A process according to any one of claims 1 to 37 inclusive, wherein the cellulose material is treated in the exhaust process.

39. A process according to any one of claims 1 to 35 inclusive, wherein textile cellulose material or paper is treated.

40. A process according to claim 39 wherein cotton, viscose, linen or rayon is treated.

41. A dye liquor for performing the process according to any one of claims 1 to 40 inclusive, which dye liquor comprises at least one cationic or basic dye which a) has available at least one system of delocalised π-electrons, which system consists of at least 9 conjugated double bonds lying in one plane, and b) possesses a planar molecular structure, as well as at least one cationic or basic polymeric levelling agent which contains at least one amino, ammonium sulfonium or phosphonium group, the amino group under application conditions being in the protonised form.

42. The cellulose-containing fibre material dyed by the process according to any one of claims 1 to 40.

**Revendications**

1. Procédé pour la teinture de matières fibreuses contenant de la cellulose avec un bain de teinture aqueux contenant au moins un colorant cationique ou basique, caractérisé par le fait que sont utilisés des colorants qui:

a) disposent d'au moins un système d'électrons π délocalisés, qui est constitué par au moins neuf doubles liaisons conjuguées situées dans un plan, et

b) possèdent une structure moléculaire planaire, cette matière étant traitée avant ou pendant la teinture avec au moins un agent d'unisson cationique ou basique, qui contient ou moins un groupe amino, ammonium, sulfonium ou phosphonium, le groupe amino existant sous forme protonée dans les conditions d'utilisation.

2. Procédé selon la revendication 1, caractérisé par le fait qu'on utilise comme colorant cationique ou basique, un de ceux qui contient au moins 12 doubles liaisons conjuguées ininterrompues situées dans un plan.

3. Procédé selon les revendications 1 ou 2, caractérisé par le fait que les colorants cationiques ou basiques contiennent 1 à 8 groupes cationiques ou basiques.

4. Procédé selon la revendication 3, caractérisé par le fait que les colorants cationiques ou basiques contiennent 1 à 3 groupes cationiques ou basiques.

5. Procédé selon la revendication 1, caractérisé par le fait qu'on utilise comme colorant un de ce genre ayant la formule:

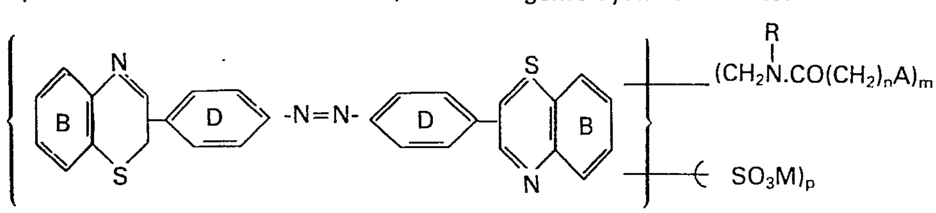

dans laquelle:

R désigne de l'hydrogène ou un groupe alkyle ayant 1 à 4 atomes de carbone,

A est un reste basique éventuellement rendu quaternaire,

n représente les nombres 1 à 4,

m représente les nombres de 1 à 4,

M est de l'hydrogène ou un cation,

p représente les nombres de 0 à 2, à condition que m soit identique ou supérieur à p, et dans laquelle les restes benzéniques B et D peuvent être encore substitués d'une façon identique ou différente, une ou plusieurs fois.

6. Procédé selon la revendication 1, caractérisé par le fait qu'on utilise comme colorant un de ce genre ayant la formule:

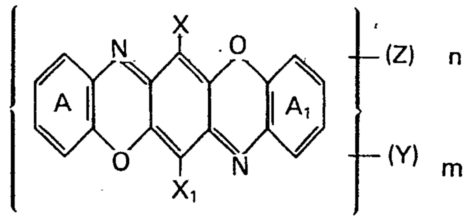

dans laquelle:

Z est un groupe basique éventuellement rendu quaternaire;

Y est un groupe anionique;

X et $X_1$ indépendamment l'un de l'autre sont des substituants identiques ou différents appartenant aux classes: hydrogène, halogène, CN, alkyle, $(C_1–C_4)$ éventuellement substitué; phényle éventuellement substitué; $NHCOR_1$ où $R_1$ est un groupe alkyle $(C_1–C_4)$, cycloalkyle, aryle éventuellement substitué ou un reste hétérocyclique; $OCOR_2$ où $R_2$ est un groupe alkyle $(C_1–C_4)$ éventuellement substitué ou cycloalkyle; ou bien

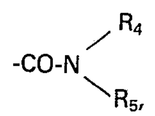

où $R_4$ et $R_5$ indépendamment l'un de l'autre désignent de l'hydrogène, des groupes alkyle $(C_1–C_4)$ éventuellement substitués, cycloalkyle ou aryle, ou bien $R_4$ forme avec $R_5$ en incluant l'atome N un noyau hétérocyclique, ou bien

X et $X_1$ désignent le groupe $COOR_6$ dans lequel $R_6$ est de l'hydrogène, un radical alkyle éventuellement substitué ou cycloalkyle;

n représente les nombres de 1 à 4;

m représente les nombres de 0 à 2, à condition que le nombre m soit plus petit que n, et dans laquelle les restes benzéniques A et $A_1$ peuvent être encore substitués, d'une façon identique ou différente, une ou plusieurs fois.

7. Procédé selon la revendication 1, caractérisé par le fait qu'on utilise comme colorant un colorant ayant la formule:

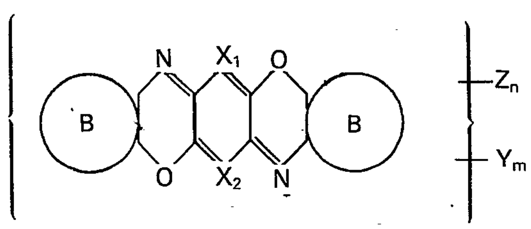

dans laquelle:

$X_1$ et $X_2$ indépendamment l'un de l'autre représentent des groupes alkyle ayant 1 à 4 atomes de carbone, ramifiés ou non ramifiés, des groupes phényle éventuellement substitués, halogéno, de l'hydrogène, des groupes cyano, des groupes phénylamino substitués éventuellement dans le reste phényle, les groupes $CONH_2$, -CONH-phényle qui peuvent être substitués dans le reste phényle, ou bien des groupes COO-alkyl$(C_1–C_4)$;

Z est un groupe basique éventuellement rendu quaternaire;

Y est un groupe anionique;

B indépendamment l'un de l'autre représente des systèmes cycliques fixés par condensation ayant 2 à 4 noyaux carbocycliques et/ou hétérocycliques, qui en plus des substituants Z et Y peuvent être encore éventuellement substitués;

n représente les nombres de 1 à 4 et

m représente les nombres de 0 à 2 à condition que m ne soit pas plus grand que n.

8. Procédé selon l'une des revendications 1 à 7, caractérisé par le fait que l'agent d'unisson polymère contient des groupes ammonium.

9. Procédé selon la revendication 8, caractérisé par le fait que l'agent d'unisson polymère contenant des groupes ammonium contient un copolymère d'anhydride maléïque et d'éthylène ou de styrène qui a réagi avec une n-alkylamine ayant 2 ou 3 atomes de carbone, qui est substituée en fin de chaîne sur le reste alkyle par un radical alkylamino ayant 1 à 4 atomes de carbone ou par une amine cyclique présentant 4 ou 5 atomes de carbone cycliques ou bien contient un homopolymère d'une vinylpyridine éventuellement substitué par les radicaux méthyle ou éthyle, l'homopolymère ou le copolymère étant rendus quaternaires avec un halogénométhylnaphthalène oudiphényle, avec du chloracétamide ou du chloracétonitrile, ou bien avec un halogénure de benzyle

éventuellement substitué par de l'halogène, les radicaux méthyle ou éthyle, ou avec un halogénure d'alkyle ou d'alcényle ayant au maximum 4 atomes de carbone.

10. Procédé selon la revendication 9, caractérisé par le fait que l'agent d'unisson polymère présente des unités répétitives cationiques qui correspondent à une des formules:

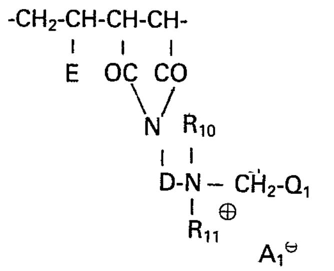

ou

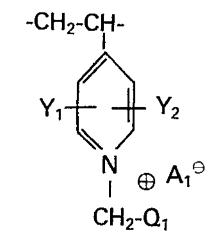

dans lesquelles $Q_1$ est un substituant ayant les formules:

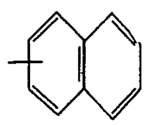

,

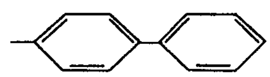

,

$-CO-NH_2$, (4d) $-C\equiv N$ ,

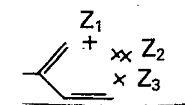

oder

$-(CH_2)_nH$, où n = 5 à 19, ou bien $Q_1$ est un mélange d'au moins un substituant ayant une des formules mentionnées avec des radicaux alkyle ou alcényle ayant au plus 4 atomes de carbone, et D est un groupe éthylène ou n-propylène; E est de l'hydrogène ou un groupe phényle; $R_{10}$ et $R_{11}$ sont chacun un groupe méthyle, éthyle, n-propyle ou n-butyle, ou forment ensemble avec l'atome d'azote auquel ils sont liés un reste pyrolidine, pipéridine ou morpholine; $A_1$ est de l'halogène; $Y_1$ et $Y_2$ sont chacun de l'hydrogène un groupe méthyle ou éthyle; et $Z_1$, $Z_2$ et $Z_3$ sont chacun de l'hydrogène, de l'halogène, un groupe méthyle ou éthyle.

11. Procédé selon la revendication 10, caractérisé par le fait que l'agent d'unisson présente des unités répétitives cationiques ayant l'une des formules:

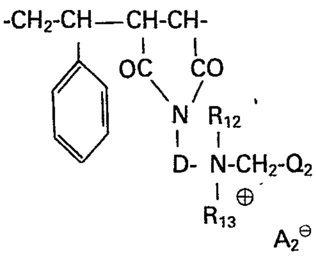

ou

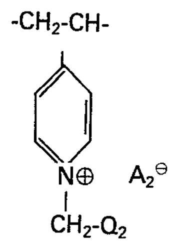

dans laquelle $Q_2$ est un groupe -CN, $CO-NH_2$ ou phényle; D est un groupe éthylène ou n-propylène; $A_2$ est du chlore ou du brome; $R_{12}$ et $R_{13}$ sont chacun un groupe méthyle, éthyle ou n-propyle ou bien forment ensemble avec l'atome d'azote auquel ils sont liés un reste morpholine.

12. Procédé selon la revendication 11, caractérisé par le fait que l'agent d'unisson présente des unités répétitives cationiques ayant l'une des formules:

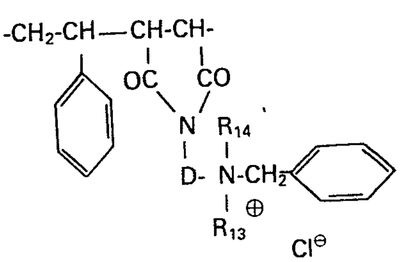

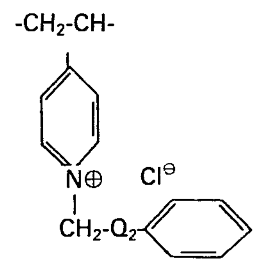

dans lesquelles D est un groupe éthylène ou n-propylène; $R_{14}$ et $R_{15}$ sont chacun un groupe méthyle ou éthyle.

13. Procédé selon l'une des revendications 9 à 12, caractérisé par le fait que l'agent d'unisson a un poids moléculaire moyen de 1500 à 1000000.

14. Procédé selon la revendication 8, caractérisé par le fait que l'agent d'unisson polymère contenant des groupes ammonium est un sel d'ammonium quaternaire qui présente des unités répétitives cationiques ayant la formule:

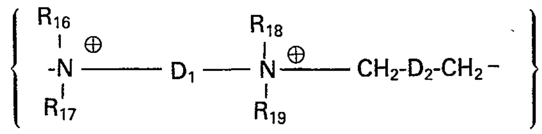

dans laquelle $R_{16}$, $R_{17}$, $R_{18}$ et $R_{19}$ sont identiques ou différents les uns des autres et représentent des groupes alkyle éventuellement substitués, cycloalkyle ou alcényle ayant au plus 20 atomes de carbone, des groupes aryle ou aralkyle ou bien ($R_{16}$ et $R_{17}$) et/ou ($R_{18}$ et $R_{19}$) forment ensemble avec l'atome d'azote auquel ils sont liés un noyau hétérocyclique à 5 ou 6 chaînons éventuellement substitué; $D_1$ désigne le groupe $-(CH_2)_m-$, dans lequel m est un nombre de 1 à 20, éventuellement interrompu par au moins un groupe -S-, $-\overset{O}{\overset{\|}{C}}-$ ou -CH=CH-, ou bien substitué avec au moins un radical hydroxyle, halogéno, nitrile, alkyle, hydroxyalkyle, alcoxy, carboxyle ou carbalcoxy, ou éventuellement au moins un reste aryle ou aralkyle substitué; $D_1$ désigne en outre un reste polyoxyalkylène ou un reste ayant la formule:

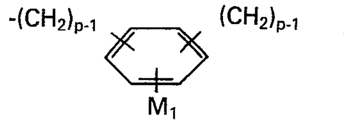

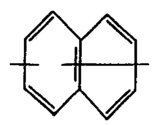 , 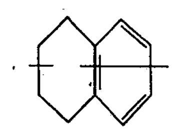

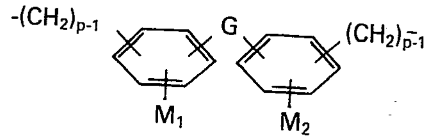

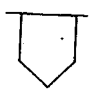 , 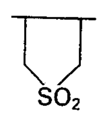 ,

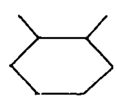 , 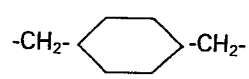 ou

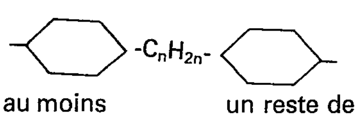

ou bien forme avec les atomes d'azote et au moins chacun des substituants liés aux atomes d'azote un reste de formule:

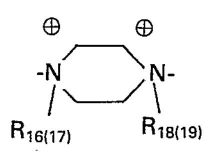 , 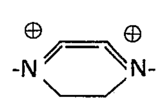 ou

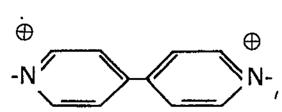

où

$M_1$ et $M_2$ sont de l'hydrogène, des groupes alkyle, hydroxyalkyle ou halogénoalkyle ayant 1 à 4 atomes de carbone, hydroxyle, halogéno, carboxyle, carbalcoxy ou phényle,

G est la liaison directe ou représente -O-, $-\underset{O}{\underset{\|}{C}}-$, -S-, $-SO_2-$ ou un groupe alkylène éventuellement substitué,

n est un nombre de 1 à 6,
p est un nombre de 1 à 3, de préférence 1 ou 2,

et
$D_2$ désigne un reste ayant la formule:

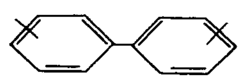

ou

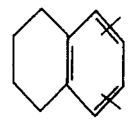

15. Procédé selon la revendication 14, caractérisé par le fait que l'agent d'unisson polymère présente des unités répétitives cationiques ayant la formule:

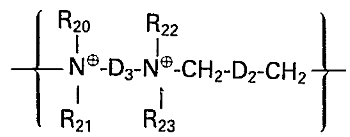

dans laquelle $R_{20}$, $R_{21}$, $R_{22}$, $R_{23}$ sont identiques ou différents les uns des autres et représentent des groupes cycloalkyle ayant 5 ou 6 atomes de carbone; alkyle, hydroxyalkyle, cyanoalkyle, alcoxyalkyle, alkylthioalkyle et alkylcarbonylalkyle ayant 1 à 10 atomes de carbone; arylcarbonylalkyle, alkylsulfonylalkyle et arylsulfonylalkyle ayant chacun 1 à 4 atomes de carbone dans la partie alkyle; carboxyalkyle ayant 1 à 4 atomes de carbone dans la partie alkyle; carbalcoxyalkyle et di-(carbalcoxy)-alkyle ayant chacun 1 à 4 atomes de carbone dans la partie alcoxy et dans la partie alkyle; amidalkylcarboxylique ayant 1 à 10 atomes de carbone dans la partie alkyle et éventuellement N-substitué avec un radical alkyle inférieur ou aryle; ou bien sont des groupes phényle ou benzyle éventuellement substitués par des radicaux hydroxyle, cyano, halogéno et carboxyle; des groupes alkyle, hydroxyalkyle, cyanoalkyle, alcoxy et alkylthio ayant 1 à 4 atomes de carbone; des radicaux alcoxyalkyle, carbalcoxyalkyle et di-(carbalcoxy)alkyle avec chacun 1 à 4 atomes de carbone dans la partie alkyle et dans la partie alcoxy, ou bien ($R_{20}$ et $R_{21}$) et/ou ($R_{22}$ et $R_{23}$) forment ensemble avec l'atome d'azote auquel ils sont liés un noyau hétérocyclique à 5 ou 6 chaînons éventuellement substitué; $D_3$ désigne un groupe $-(CH_2)_m-$, dans lequel m est un nombre de 1 à 20, éventuellement interrompu par au moins un groupe -S-, $-\overset{\displaystyle O}{\overset{\|}{C}}-$ ou -CH=CH- ou bien substitué au moins un radical hydroxyle, chloro, nitrile ou alkyle, alcoxy ou hydroxyalkyle ayant 1 à 4 atomes de carbone, carboxyle ou carbalcoxy ayant 1 à 20, de préférence 1 à 4 atomes de carbone dans le reste alcoxy, ou bien des restes phényle ou benzyle éventuellement substitués; en outre $D_3$ dans le cas où $R_{20}$ à $R_{23}$ sont des groupes méthyle, représente un reste de formule:

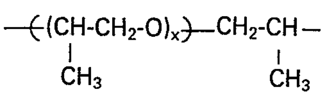

en outre, $D_3$ représente les chaînons formant pont suivants:

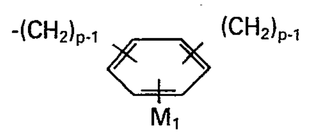

,

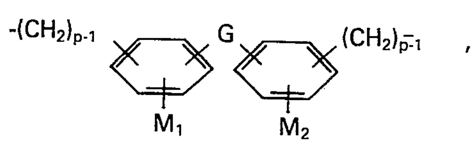

,

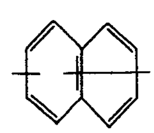

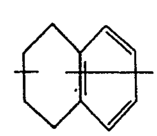

,

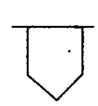

,

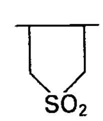

,

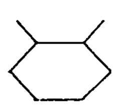

,

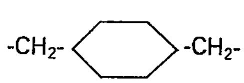

ou

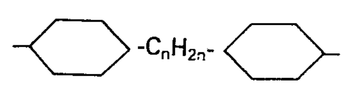

ou bien forme avec les atomes d'azote et au moins chacun des substituants qui sont liés aux atomes d'azote un reste ayant la formule:

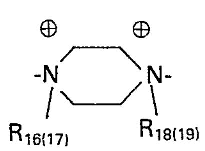

,

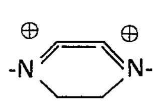

ou

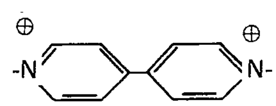

formules dans lesquelles x vaut 2, 6, 5,6 ou 33,1, et $D_2$, $M_1$ et $M_2$, $G_1$, p et n ont les significations données dans la revendication 14.

16. Procédé selon la revendication 15, caractérisé par le fait que l'agent d'unisson polymère présente des unités répétitives cationiques ayant la formule:

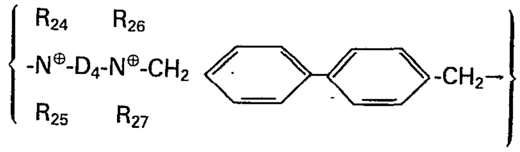

dans laquelle $R_{24}$, $R_{25}$, $R_{26}$ et $R_{27}$ sont identiques ou différents les uns des autres et représentent des groupes alkyle ou hydroxyalkyle ayant 1 à 4 atomes de carbone, alcényle ayant 2 à 4 atomes de carbone $CH_3OOCCH_2$-, $C_2H_5OOCH_2$- ou un groupe benzyle, ou bien ($R_{24}$ et $R_{25}$) et/ou ($R_{26}$ et $R_{27}$) forment ensemble avec l'atome d'azote auquel ils sont liés un reste pipéridine ou morpholine, et $D_4$ est un groupe $-CH_2)_{m1}$-, dans lequel $m_1$ est un nombre de 1 à 12, ou bien dans le cas où $R_{24}$ à $R_{27}$ sont des groupes méthyle, ils représentent un reste de formule:

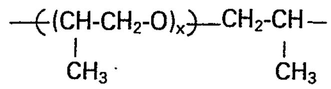

dans laquelle x vaut 2,6, 5,6 ou 33,1, ou bien $D_4$ représente des chaînons formant pont suivant:

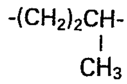 ,

$-CH_2CH{=}CHCH_2-$,

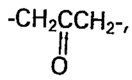

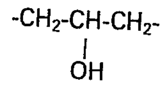 ,

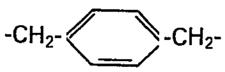 ,

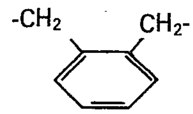 ,

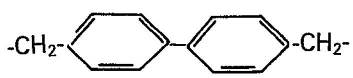 ,

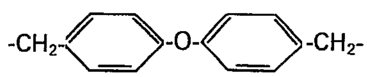 ,

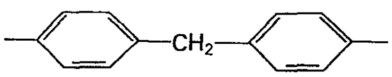

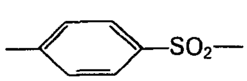 ou

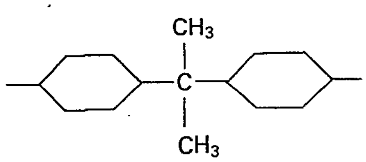

ou bien forme conjointement avec les atomes d'azote et au moins chacun des substituants liés aux atomes d'azote un reste ayant l'une des formules:

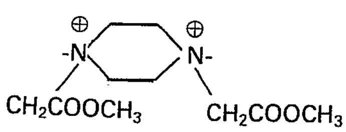 ou 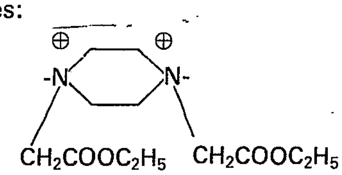

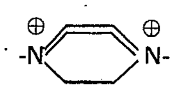 ou 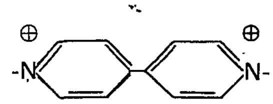

17. Procédé selon la revendication 16, caractérisé par le fait que l'agent d'unisson polymère présente des unités répétitives cationiques ayant la formule:

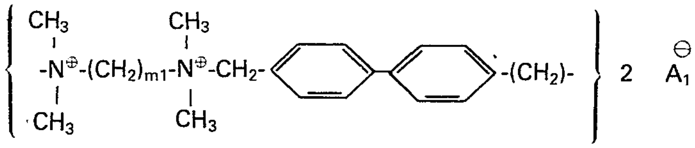

dans laquelle $m_1$ vaut 1 à 12, et $A_1$ est de l'halogène.

18. Procédé selon la revendication 16, caractérisé par le fait que l'agent d'unisson présente des unités répétitives cationiques ayant la formule:

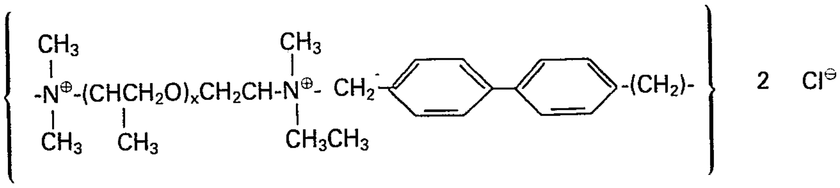

dans laquelle x vaut 2,6, 5,6 ou 33,1.

19. Procédé selon la revendication 8, caractérisé par le fait que l'agent d'unisson polymère contenant des groupes ammonium est un sel d'ammonium quaternaire qui présente des unités répétitives cationiques ayant la formule:

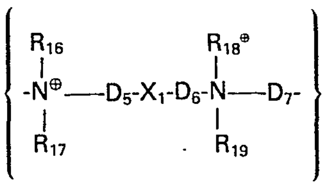

dans laquelle $R_{16}$, $R_{17}$, $R_{18}$ et $R_{19}$ ont les significations données dans la revendication 14; $D_5$ et $D_6$ représentent les groupes $-C_nH_{2n}-$, où n vaut 1 à 12 et la somme de n dans $D_5$ et $D_6$ est au moins de 3, et pour n égal à 1, la liaison au chaînon pontal $X_1$ ne s'effectue pas par un atome d'azote ou d'oxygène, ou bien sont des chaînons formant pont aromatiques, et $D_5$ et $D_6$ sont identiques ou différents l'un de l'autre; $D_7$ est un reste de formules

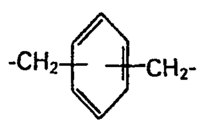

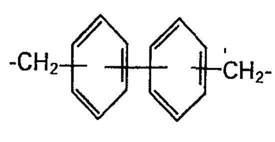

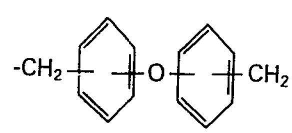

ou

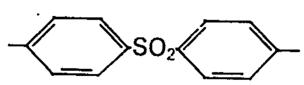

dans lesquelles $G_1$ est un groupe alkylène ayant 2 à 12 atomes de carbone, à chaîne droite ou ramifiée, éventuellement substitué par de l'halogène; $G_2$ est un groupe éthylène, isopropylène ou n-butylène; $m_2$ vaut 2 à 12 et $p_1$ vaut 2 à 15, et $X_1$ est un chaînon pontal divalent ayant la formule:

-NHCONH- , -NHCOX$_2$CONH- , -CONH- , -OCONH- ,

-COO- , -COX$_3$CO- ,

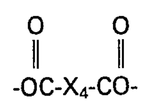

ou

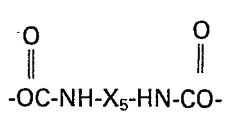

où $X_2$ est la liaison directe, un groupe alkylène, alcénylène, arylène ou hétéroarylène, diaminoalkylène, diaminoarylène, dioxyalkylène éventuellement halogéné polyoxyalkylènoxy ou dioxyary-

lène; $X_3$ est un groupe diaminoalkylène, dioxyalkylène éventuellement halogéné, polyoxyalkylènoxy ou dithioalkylène éventuellement halogéné; $X_4$ est un groupe arylène, et $X_5$ est un groupe alkylène ou arylène.

20. Procédé selon la revendication 19, caractérisé par le fait que l'agent d'unisson polymère présente des unités répétitives cationiques ayant la formule:

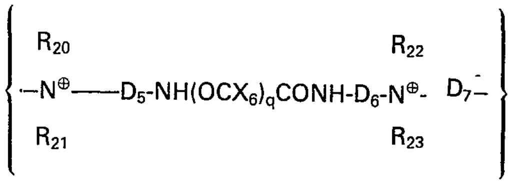

dans laquelle $R_{20}$, $R_{21}$, $R_{22}$ et $R_{23}$ ont les significations données dans la revendication 15; $X_6$ est un groupe $-C_rH_{2r}-$, dans lequel r est un nombre entier de 1 à 12, un groupe $-(CH=CH-)_s$, dans lequel s vaut 1 ou 2, un reste de formule $-NH(CH_2)_mNH-$, dans laquelle m vaut 2 à 12:

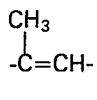 , 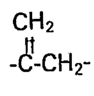 , 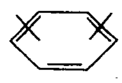 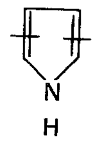 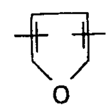 ,

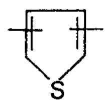 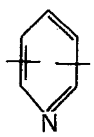 , 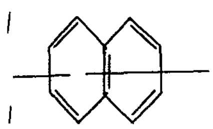 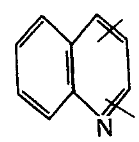 ,

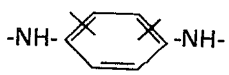 ou 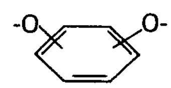

dans lesquels les noyaux aromatiques peuvent être substitués par de l'halogène, des radicaux alkyle et/ou alcoxy, ayant aussi la formule:

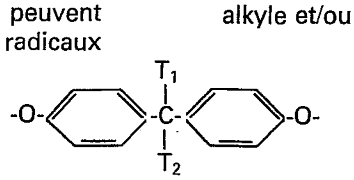

dans laquelle $T_1$ et $T_2$ désignent chacun de l'hydrogène ou un groupe méthyle, et ayant la formule $-OG_1O-$ ou $(OG_2)_{p1}O-$ dans lesquelles $G_1$, $G_2$, $p_1$ et $D_5$, $D_6$ et $D_7$ ont les significations données dans la revendication 19 et q vaut 0 ou 1.

21. Procédé selon la revendication 19, caractérisé par le fait que l'agent d'unisson polymère possède des unités répétitives cationiques ayant la formule:

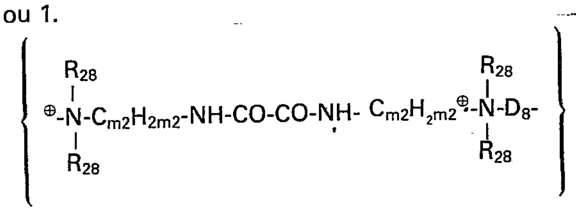

dans laquelle $R_{28}$ est un groupe alkyle ayant 1 à 4 atomes de carbone; $D_8$ est un groupe $-C_{m3}H_{2m3}-$,

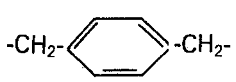 , 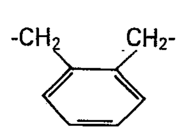 ou 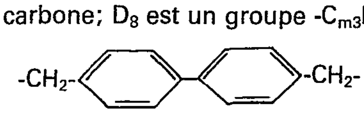 ,

dans lesquelles $m_2$ vaut 2 à 12, et $m_3$ vaut 2 à 6.

22. Procédé selon la revendication 19, caractérisé par le fait que l'agent d'unisson polymère présente les unités répétitives cationiques ayant la formule:

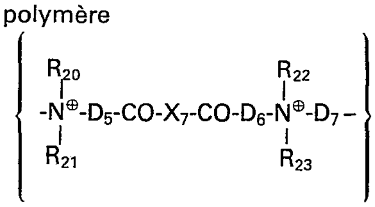

dans laquelle $X_7$ représente un groupe $-OG_1O-$, $(OG_2)_{p1}O-$, $-S(CH_2)_{m2}S-$ ou $-HN(CH_2)_{m2}NH-$, et $G_1$, $G_2$, $m_2$, $p_1$, $D_5$, $D_6$, $D_7$ $R_{20}$, $R_{21}$, $R_{22}$ et $R_{23}$ ont les significations données dans les revendications 15 et 19.

23. Procédé selon la revendication 19, caractérisé par le fait que l'agent d'unisson polymère présente des unités répétitives cationiques ayant la formule:

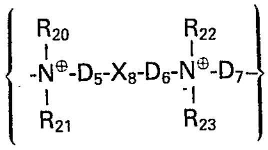

dans laquelle $X_8$ est -CONH-, -OCONH- ou -COO-, et $D_5$, $D_6$, $D_7$ et $R_{20}$, $R_{21}$, $R_{22}$ et $R_{23}$ ont les significations données dans les revendications 15 et 19.

24. Procédé selon la revendication 23, caractérisé par le fait que l'agent d'unisson polymère présente des unités répétitives cationiques de formule:

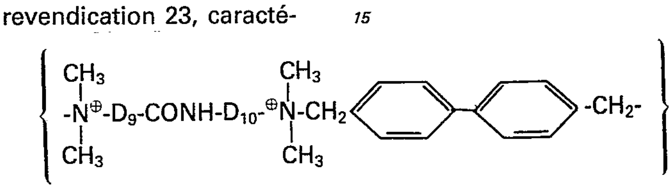

dans laquelle $D_9$ est un groupe alkylène ayant 1 à 4 atomes de carbone ou phénylène, et $D_{10}$ est un groupe alkylène ayant 2 à 6 atomes de carbone ou phénylène.

25. Procédé selon la revendication 19, caractérisé par le fait que l'agent d'unisson polymère présente des unités répétitives cationiques ayant la formule:

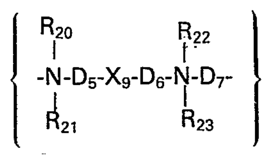

dans laquelle $X_9$ est un reste ayant les formules:

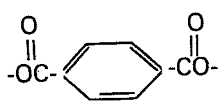 , 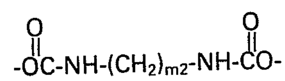 ou

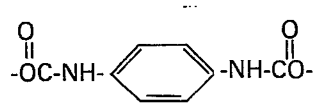

et $m_2$, $D_5$, $D_6$, $D_7$, $R_{20}$, $R_{21}$, $R_{22}$ et $R_{23}$ ont les significations données dans les revendications 15 et 19.

26. Procédé selon la revendication 19, caractérisé par le fait que l'agent d'unisson polymère présente des unités répétitives cationiques ayant la formule:

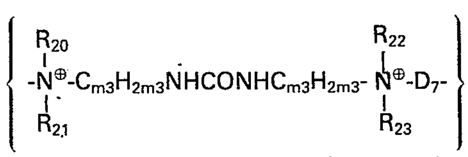

dans laquelle $m_3$ vaut 2 à 6, et $D_7$, $R_{20}$, $R_{21}$, $R_{22}$ et $R_{23}$ ont les significations données dans les revendications 15 et 19.

27. Procédé selon la revendication 26, caractérisé par le fait que l'agent d'unisson polymère présente des unités répétitives cationiques ayant la formule:

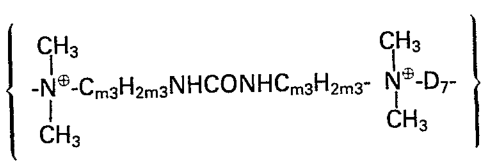

dans laquelle $D_7$ et $m_3$ ont les significations données dans les revendications 19 et 26.

28. Procédé selon l'une des revendications 14 à 27, caractérisé par le fait que l'agent d'unisson

polymère a un poids moléculaire moyen de 1000 à 100000.

29. Procédé selon l'une des revendications 1 à 28, caractérisé par le fait que l'agent d'unisson polymère cationique ou basique est utilisé à raison de 0,01 à 5% en poids rapporté à la matière cellulosique.

30. Procédé selon la revendication 29, caractérisé par le fait que l'agent d'unisson polymère cationique ou basique est utilisé à raison de 0,1 à 0,5% en poids rapporté à la matière cellulosique.

31. Procédé selon l'une des revendications 1 à 30, caractérisé par le fait que le bain de teinture aqueux contient au moins 2 colorants cationiques ou basiques.

32. Procédé selon l'une des revendications 1 à 30, caractérisé par le fait que le bain de teinture aqueux contient au moins 3 colorants cationiques ou basiques.

33. Procédé selon l'une des revendications 1 à 32, caractérisé par le fait que la matière fibreuse cellulosique est pré-traitée avec un bain aqueux contenant au moins un agent d'unisson polymère cationique ou basique.

34. Procédé selon la revendication 33, caractérisé par le fait qu'on traite au préalable la matière fibreuse cellulosique à une température de 10 à 130°C.

35. Procédé selon la revendication 34, caractérisé par le fait qu'on traite au préalable la matière fibreuse cellulosique à une température de 20 à 50°C.

36. Procédé selon l'une des revendications 1 à 35, caractérisé par le fait que le pH du bain de prétraitement et/ou du bain de teinture est compris entre 3 et 11.

37. Procédé selon la revendication 36, caractérisé par le fait que le pH du bain de traitement et/ou du bain de teinture est compris entre 4 et 7.

38. Procédé selon l'une des revendications 1 à 37, caractérisé par le fait qu'on traite la matière cellulosique dans le procédé par épuisement.

39. Procédé selon l'une des revendicaitons 1 à 35, caractérisé par le fait qu'on traite la matière textile cellulosique ou le papier.

40. Procédé selon la revendication 39, caractérisé par le fait qu'on traite le coton, la viscose, le lin ou la rayonne.

41. Bain de teinture pour effectuer le procédé selon l'une des revendications 1 à 40, caractérisé par le fait qu'il contient au moins un colorant cationique ou basique, lequel dispose d'au moins un système d'électrons $\pi$ délocalisés qui est constitué par au moins 9 doubles liaisons conjuguées situées dans un plan et qui possède une structure moléculaire planaire, ainsi qu'au moins un agent d'unisson polymère cationique ou basique qui contient au moins un groupe amino, ammonium, sulfonium ou phosphonium, le groupe amino existant sous la forme protonée dans les conditions d'utilisation.

42. La matière fibreuse cellulosique teinte selon le procédé conformément à l'une des revendications 1 à 40.